# EUROPEAN PATENT APPLICATION

(11) **EP 0 070 654 A2**
(43) Date of publication of application: **26.01.1983**
(21) Application number: 82303598.5
(22) Date of filing: 09.07.1982
(51) Int. Cl.: G05B 19/403, G05B 19/23

(54) **Motion controller**

(30) Priority: 10.07.1981 US 282280
(71) Applicant: GOULD INC., Rolling Meadows, IL 60008 (US)
(72) Inventor: Provanzano, Salvatore R., Melrose Middlesex Massachusetts (US); Drottar, Emil P., Georgetown Essex Massachusetts (US); Finnegan, John J., Jr., Hudson Hillsborough New Hampshire (US); Kopp, Lowell E., Winchester Middlesex Massachusetts (US); Namery, Jerry, Waltham Middlesex Massachusetts (US); Ehrlich, Evelyn F., Newton Junction Rockingham New Hampshire (US); Determan, David D., No. Andover Essex Massachusetts (US); Bellofatto, Anthony J., Everett Middlesex Massachusetts (US); Belmonte, Jack A., Tewksbury Middlesex Massachusetts (US); Zeitvogel, Randolph K., Billerica Middlesex Massachusetts (US); Wong, Keith K., Billerica Middlesex Massachusetts (US); Mac Eachern, David P., Dracut Middlesex Massachusetts (US); Lindner, David T., Nashua Hillsborough New Hampshire (US); Wendell, Y.G., Ing., Arlington Middlesex Massachusetts (US); Corrigan, Michael J., Wilmington Middlesex Massachusetts (US)
(74) Representative: Wilson, Joseph Martin (GB)

(57) **Abstract**

A motion controller is described that provides accurate control of DC servo motors. The motion controller provides complete control of motor speed, direction, acceleration, deceleration and position as programmed by the user. The user defines unique motions by generating chords. Groups of the chords are combined to form motion profiles. The profiles are interrelated via a high-level language to form functional areas that combine to generate an overall control.

Adjustable gain. conditional logic, programmable controller intervention, dwells and output information are all utilized to facilitate program generation. An interconnectable programmable panel allows user access to the controller. The motion controller further has a manual operation mode.

## Description

### TECHNICAL FIELD

The present invention relates to motion controllers which may use feedback control systems to. control DC servo motors or stepper motors. A related area of technology is the field of robotics, which uses motion controllers.

### BACKGROUND ART

Devices to control the operation of a motor utilizing feedback control have been in existence for many years. Such feedback control systems are utilized in a wide range of control applications in which the interconnected motor or motors are to control the motion of interconnected devices.

In the relatively new field of robotics and in other applications including machine tooling, it is desirable to be able to define the particular motion to be undertaken by a device connected to a motor. In general, it is desirable to be able to define the motor speed, its direction, acceleration or deceleration, as well as its position. Although these parameters are directed to the motor, it is to be realized that the control is ultimately directed to the device under control of the motor.

Although motion controllers have been made which allow the user to define and change a particular motion, an overall simple method to define an overall motion is believed not to exist in the prior art. Specifically although it has been possible in prior art devices to define a particular motion, they generally do not allow the user to specify the gain to be used in the feedback control system with the gain modifiable from one unique motion to another. These unique motions, called chords herein, typically define an end velocity and an end position to be obtained when the chord is completed.

Furthermore, although the gain in a feedback control system can be set for underdamped, critically damped or over damped control, it has not been generally possible to allow each chord of a sequence of chords (called a motion profile here) to be arbitrarily set to a particular gain. It has been discovered that such a feature is desirable since the gain in the feedback control system represents the overall "stiffness" of the system and although a high gain or very stiff control system is generally desirable, it is not always practical due to acceleration, deceleration, and torque limits of the motor and the interconnected device. It has thus been found that the typical control engineer responsible for defining the motion control profile is generally in the best overall position to determine what gain factors to use depending upon which chord of the profile is executed.

The present invention allows the control engineer to set the gain factors for each chord independent of all other chords.

In addition, the present invention provides for various interrupts and decisional branching in any chord of the overall motion program. For example, a programmable controller interrupt may be specified for a chord. In such a situation, if a programmable controller intervention signal is received, that particular chord is interrupted with the initiation of the next designated chord. In this manner, a supervisory programmable controller can monitor the action of the motion controller and, depending upon the condition of the motion controller, determine if the particular chord undergoing execution should be interrupted.

Furthermore, each chord may utilize a dwell time for determining chord completion. Therefore although an end velocity and end position are usually denoted for each chord, it is possible to only define an end velocity leaving the end position arbitrary. In such a situation upon the occurrence of the dwell time out, the next designated chord is executed.

Decisional branching is also obtained when a particular chord is interrupted upon receipt of one or more inputs in designated Boolean states. In a preferred embodiment of the present invention, up to eight inputs may be specified for initiating a chord interrupt.

Such intervention and decisional logic capabilities of the present motion controller are believed to be new in the art.

The present invention also utilizes a block structured format for combining the motion profiles with a high level language. This language includes the capability of repetitively performing one or more motion profiles or groups of profiles (functional areas or blocks) as well as providing for conditional branching from one group of motion profiles to some other group.

The block structured language is designed to prevent improper exiting from any particular block by automatically generating a block end statement upon initiation of particular blocks. The intervening steps are then interposed between the beginning and end statements so generated.

The overall motion controller is therefore believed to define a new, versatile, easy-to-use device for defining complex motion patterns in a simple and reliable manner.

### DISCLOSURE OF THE INVENTION

The motion controller of the present invention is a microprocessor based machine which provides complete control of the speed, direction, acceleration, deceleration, and position of a device interconnected to a motor. The motor itself is actually controlled by the motion controller although inputs from the device interconnected to the motor can be utilized in the overall control function. For purposes of defining the terms used herein, a motion pattern is the overall sequence of movements to be executed by a device interconnected to the motor under motion control. This overall pattern is executed under the control of a motion program. The motion program is divided into one or more blocks, or functional areas, each block containing one or more motion profiles. Each block and each motion profile is given a name for reference purposes.

The motion profiles comprise sets of unique motions, called chords, each normally defining a particular end velocity and end position for the interconnected device. Alternatively a chord may define an end velocity without defining a particular end position in those situations where the occurrence of some other event, such as a particular dwell or time out, or receipt of a particular signal, terminates chord execution.

The chords in each motion profile are identified by number and unless a jump or decisional branch occurs, proceed sequentially. Decisional branching from one chord to a non- sequential higher chord is obtained through use of decisional statements. Such decisional statements define what are called proceed conditions which include the occurrence of a dwell time out, the occurrence of one or more defined inputs, or the occurrence of a programmable controller signal.

A typical application of the motion controller is a grinding operation. Here the control engineer can specify that the particular chord causing an object to be ground should occur for a set period of time; say, twenty-five seconds. In addition, the engineer can state that if the object being ground is reduced in size to some dimension, then an input from a limit switch is to stop the grinding operation. The occurrence of such an input would be defined in the decisional statement for that chord. The decisional statement would specify when the grinding operation is terminated and which chord is to be next executed.

The second level of the control language is a high level language which permits the user via a series of instruction lines to interconnect the motion profiles to form the overall motion program. These instruction lines include a "cycle while" instruction which causes a set of motion profiles to be executed in some order on a repetitive basis until a condition is met, such as a predetermined number of cycles.

The selection of a particular profile as defined by a name is part of the high level instruction set and may be used solely or in combination with an offset, either defined in absolute terms or by a number stored in a addressable register. In the latter situation, a particular motion profile can be re-executed with the offset causing the same pattern to be generated by the controlled device but in an offset relationship to the previous execution of that pattern. A typical example in which such an offset is utilized is where a machine tool physically cuts multiple identically shaped parts out of a workpiece.

There are other instruction lines which will be described more fully below, the overall combination allowing the user to flexibly generate any motion program desired.

Furthermore, the motion controller includes general functions such as the ability to display the current absolute position for a device from a designated "HOME" position, and to specify such a HOME position. Although the present preferred embodiment discloses a motion controller utilizing a single axis, the same concepts can be applied to control multiple axes. In such situations, each motion controller is able to designate a particular "HOME" position for each axis.

The motion controller can also be operated in a manual mode called the "jog" mode. In the "jog" mode, the control engineer can move the axis a specified distance (incremental jog) or at a specified speed (velocity jog).

The motion controller is also able to display and modify the system configuration as to its maximum acceleration, the encoder resolution used in the feedback control system, as well as units of measure and other parameters. It is further able to monitor eight inputs and eight outputs or registers on a real time basis. The controller also monitors positional (following) error through the encoder pulse count.

An interconnected programmable controller can reference and modify registers, can display its scan time for the last scan, and can indicate the machine status of the motion controller, including battery status and memory protect status. It is also able to set and/or clear the memory protect feature of the motion controller.

The motion controller has a number of general functions, such as start and stop, communication port parameter modification, access to the executive revision level data, and the ability to show system error codes immediately when they occur.

The motion controller has two simultaneously active communications connectors. One contains an RS 232 port for connection to a programming panel. The other is a differential driver/receiver to a twisted pair serial line for connection to an I/O to serial converter module so that a programmable controller (PC) can obtain status information or send commands.

An interconnecting programming panel such as that manufactured by the Modicon Division of Gould Inc., known as the _{P}190 ^{TM} programming panel, is able to perform complete programming and support of the motion controller. Programming the motion program and a special "priority execution program" can be performed in mnemonics and potentially in symbolic language. The programming panel can also load/dump and verify programs to, from, and against a tape; can start, stop, clear memory commands; and is able to configure the system, including process timers, the memory protect, jog velocities and distances, axis parameters and other variables. It can also display status, errors, internal motion controller registers, and positions.

A self-contained front panel display and keyboard also provides status information and allows the user to modify the controller in a manner analogous to a programmable controller.

Consequently, the overall motion controller provides a simple, efficient and thorough means for defining motion patterns.

### OBJECTS OF THE INVENTION

Therefore, it is a principal object of the present invention to provide a motion controller in which unique motions or chords are definable by the user and in which the gain applied to a detected error is selectable for each chord by the user.

Another object of the present invention is to provide a motion controller of the above description in which each chord can contain decisional statements so that a chord other than the next sequentially numbered chord is executed upon occurrence of a specified condition.

A further object of the present invention is to provide a motion controller of the above description in which the chord need only specify an end velocity but not an end position and in which the termination of chord execution occurs with a time out specified by the user.

Another object of the present invention is to provide a motion controller that allows the user to define linear acceleration and deceleration rates.

A further object of the present invention is to provide a motion controller of the above description in which a designated interconnected device such as a programmable controller, can interrupt a chord's execution.

A further object of the present invention is to provide a motion controller of the above description in which the chord's execution can be terminated by the change of state of one or more inputs.

A further object of the present invention is to provide a motion controller of the above description in which chords may be grouped together in what are called motion profiles, each profile being separately identified by the user and where the profiles can be combined by the user through use of a high level programming language so as to form blocks or functional areas that in turn combine to form an overall motion program.

A further object of the present invention is to provide a motion controller of the above description in which the high level language of the motion controller includes block structured instructions including a "Cycle While" instruction having an automatically generated "End Cycle" instruction so that other instructions selected for execution by the "Cycle While" instruction are inserted between these two statements, thereby insuring that a block structure format is obtained.

A further object of the present invention is to provide a motion controller which may generate designatable outputs that can be sensed by external devices and which can act as position activated "cam switches".

A further object of the present invention is to provide a motion controller that can be programmed in a simplified written language or alternatively in a graphic or symbolic ladder-diagram format.

A still further object of the present invention is to provide a motion controller that can be interconnected to an external programming panel for programming, monitoring, and editing.

A further object of the present invention is to provide a motion controller having a built-in key pad and display for programming and monitoring the controller.

A still further object of the present invention is to provide a motion controller which can be operated in a manual or "jog" mode so as to allow the user to designate the position and speed of the motor.

Another object of the present invention is to provide a motion controller that is compatible with incremented encoders with quadrative outputs.

A still further object of the present invention is to provide a motion controller that has independent inputs which can be programmed as stops or proceed switches.

A further object of the present invention is to provide a motion controller that is compatible with translators having various interface requirements.

Further objects of the present invention will in part be obvious and will in part appear hereinafter.

### BRIEF DESCRIPTION OF THE DRAWINGS

For a fuller understanding of the nature and objects of the present invention, reference should be made to the following detailed description taken in connection with the accompanying drawings, in which:
FIGURE 1 is an overall block diagram of a motion controller according to the present invention showing its interconnection to a DC servo driver, DC motor, tachometer, incremental position encoder, and other inputs as well as interconnection with a programmable controller and programming panel;
FIGURE 1A is a diagrammatic representation of the motion controller and interrelated components referred to in FIGURE 1;
FIGURE 2 is an overall block diagram of a motion controller according to the present invention showing its interconnection with a translator, stepper motor, incremental position encoder, and other inputs, and as well as interconnection with a programmable controller and programming panel;
FIGURE 3A is an overall functional block diagram of the motion controller;
FIGURE 3B is a generalized block diagram of the motion controller system architecture;
FIGURES 3C-3E combine to form an overall diagrammatic representation of the motion controller bus interconnections;
FIGURE 3F is a diagram showing how FIGURES 3C -3E are put together;
FIGURE 3G is a diagrammatic representation of the electrical interfacing between the components forming the motion controller of FIGURE I;
FIGURE 4 is a moderately detailed block diagram of the linear velocity ramp generator and the following error to velocity converter shown in FIGURE 3;
FIGURE 5 is a diagrammatic representation of a "do" command forming part of the higher level language of the motion controller;
FIGURE 6A is a graphic plot of a velocity profile versus time, the profile containing five chords;
FIGURE 6B is a corresponding graph of the position pulses generated by the motion controller to execute the motion profile of FIGURE 6A;
FIGURE 7A is a graphic representation of five chords forming a motion profile;
FIGURE 7B is a graphic representation of the information which would be displayed with the graphic representation shown in FIGURE 7A;
FIGURES 8A and 8B combine to form a pictorial representation of a ladder-diagram graphic or symbolic format for executing the chords shown in FIGURE 7A;
FIGURE 8C is a diagram showing how FIGURES 8A and 8B are combined to form FIGURE 8;
FIGURE 9 is a pictorial representation of a front panel display/key pad forming part of the motion controller;
FIGURE 10 is a graphic representation of the pulses generated by the incremental position encoder;
FIGURE 11 is a diagrammatic representation of the encoder disc of the incremental position encoder forming the pulses shown in FIGURE 10;
FIGURE 12 is a top plan view of a CRT programming panel for programming, monitoring, and editing a motion program executed by the motor controller;
FIGURE 13 is a block diagram of the tree structure for generating motion programs;
FIGURES 14A-14D combine to form a detailed block diagram of the microprocessor system shown in FIGURE 3A;
FIGURE 14E is a diagram showing how FIGURES 14A-14D are combined to form FIGURE 14;
FIGURES 15-15D combine to form a detailed block diagram of the motor controller or following error to velocity converter module shown in FIGURE 3A;
FIGURE 15E is a diagram showing how FIGURES 15A-15D are combined to form FIGURE 15;
FIGURES 16A-16D combine to form a detailed block diagram of the linear velocity ramp generator shown in FIGURE 3A;
FIGURE 16E is a diagram showing how FIGURES 16A-16D are combined to form FIGURE 16:
FIGURES 17A-17D combine to form a detailed block diagram of the communication system interface for the motion controller shown in FIGURE 3A;
FIGURE 17E is a diagram showing how FIGURES 17A-17D combine to form FIGURE 17;
FIGURES 18A-18D combine to form a detailed block diagram of the I/O to serial converter shown in FIGURE 3A;
FIGURE 18E is a diagram showing how FIGURES 18A-18D combine to form FIGURE 18;
FIGURES 19A-19B combine to form a detailed block diagram of the input module shown in FIGURES 1 or 2;
FIGURE 19C is a diagram showing how FIGURES 19A-19B combine to form FIGURE 19;
FIGURES 20A-20D combine to form a detailed block diagram of the output module of the motion controller shown in FIGURES 1 or 2; and
FIGURE 20C is a diagram showing how FIGURES 20A-20B are combined to form FIGURE 20.

### BEST MODE FOR CARRYING OUT THE INVENTION

### General Description and Operation

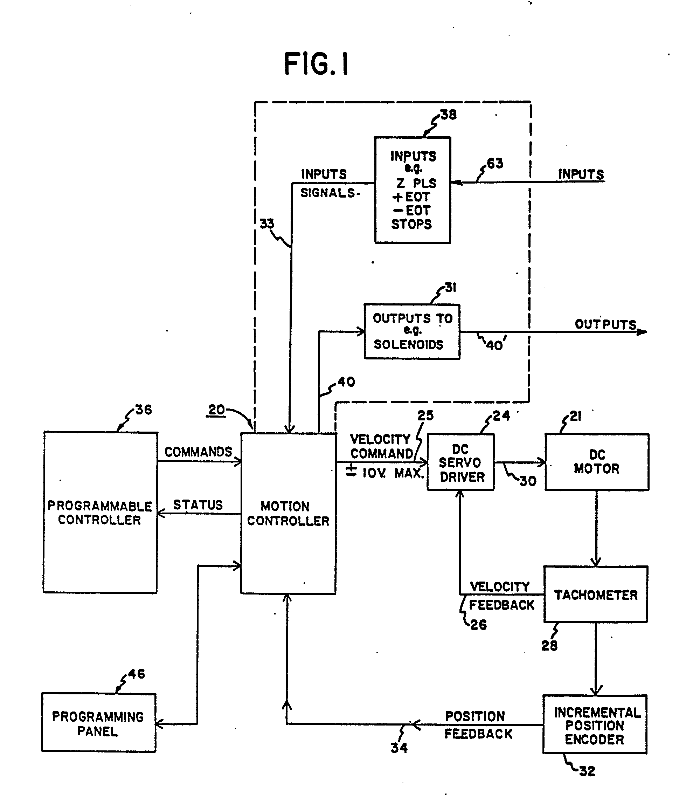

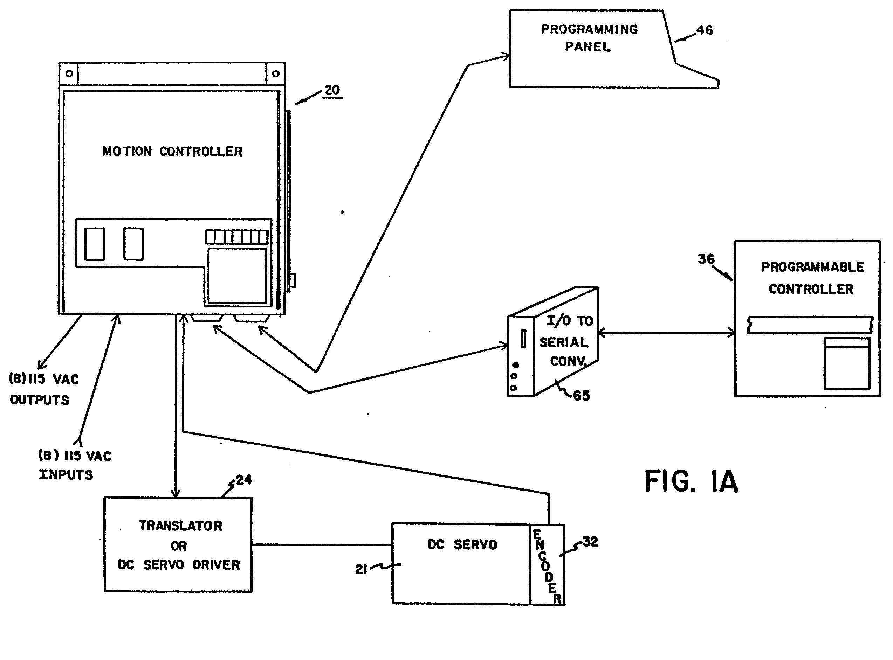

As best seen in FIGURE 1, a motion controller 20 according to the present invention can, in one embodiment, be interconnected to control a DC servo motor 21. In such an embodiment, the DC servo motor utilizes a DC servo driver 24 for its input control. The DC servo driver is in turn controlled by the motor controller output 25 (the Velocity Command) and a tachometer output 26 from tachometer 28. The DC servo driver operates in a well-known manner and takes both the velocity command signal and the velocity feedback signal and combines them to produce a servo driver output 30 for driving the motor. The motor in turn is normally interconnected either directly or through some type of transmission to an external device for movement thereof. The device and transmission, if any, are not shown in the drawings.

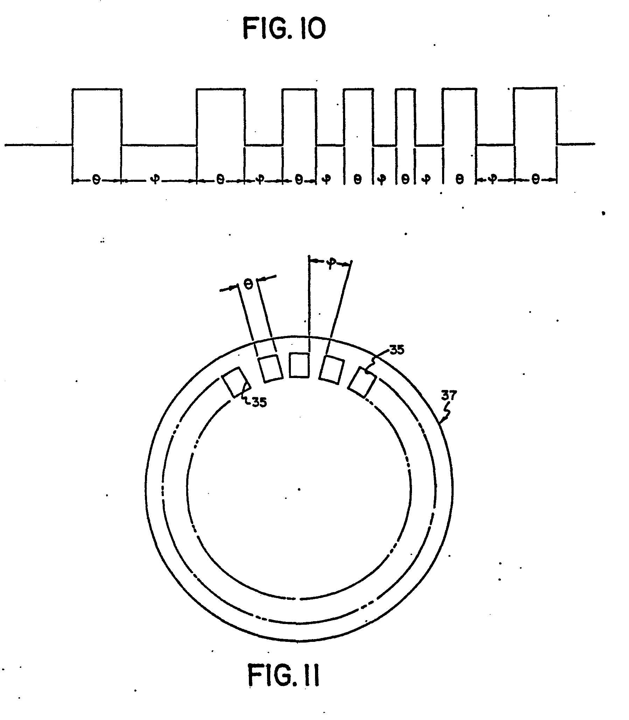

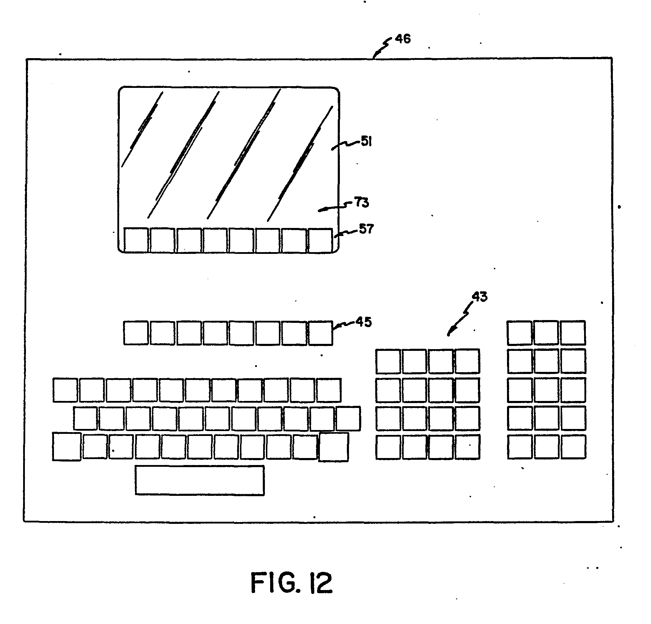

The tachometer 28 senses the angular velocity of motor 21 and thus its output signal is proportional to this angular velocity. Furthermore, the angular positional change of the motor is sensed by an incremental position encoder 32 which generates output pulses 34 (Position Feedback) proportional to the angular displacement of the motor 21. Such pulses when graphed over time appear in a manner such as shown in FIGURE 10. As best seen in FIGURES 10 and 11, the angular displacement theta is the slot size of the encoder optical window 35, while the angular displacement psi is the angular distance between such optical windows. Thus the encoder is typically in the shape of a disc 37 having slots positioned regularly about its outer radius in a manner shown diagrammatically in FIGURE 11. Such optical encoders are well-known in the art.

An incremental position encoder output 34, is transferred to the motion controller 20-for use in generating the desired Velocity command output 25.

The motion controller also receives input signals 33 from input module 38. The input module buffers and controls transfer of input information 63 from external devices such as limit switches, stops, zero position limit switches, and end of travel (EOT) limits in either a positive or negative configuration. These inputs usually generate interrupts to the system upon any change of state. The input module is part of the motion controller.

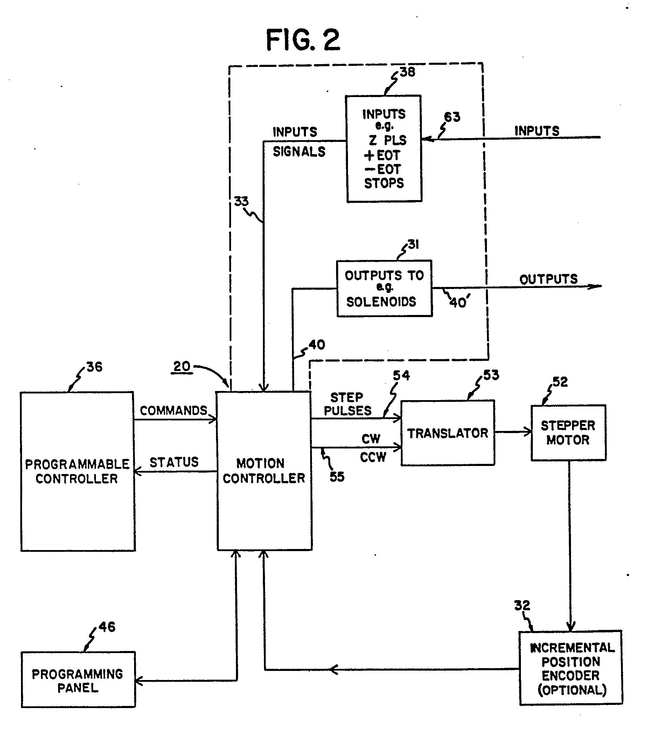

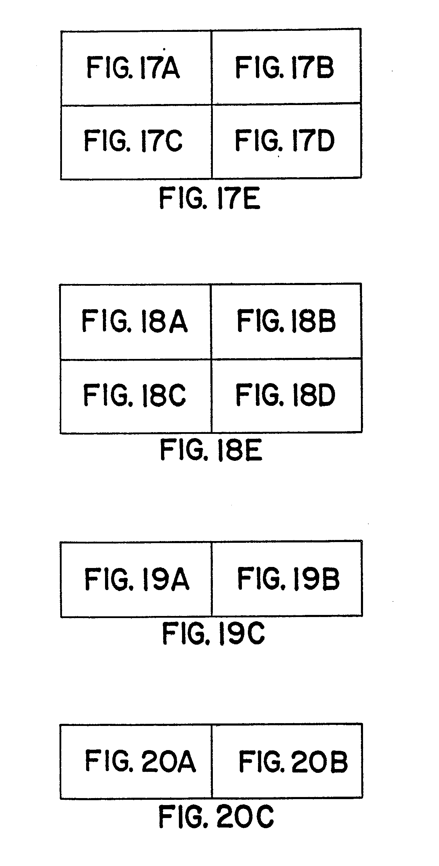

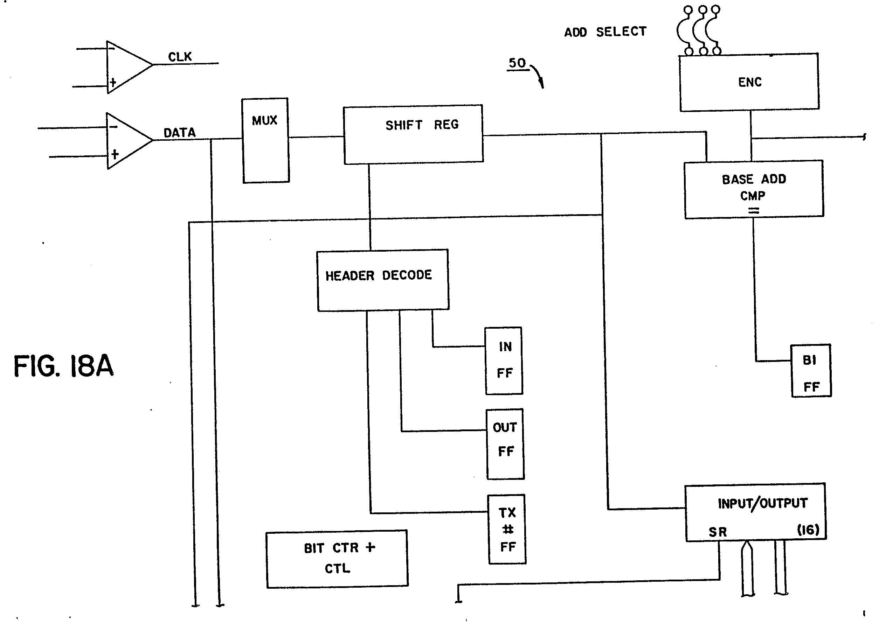

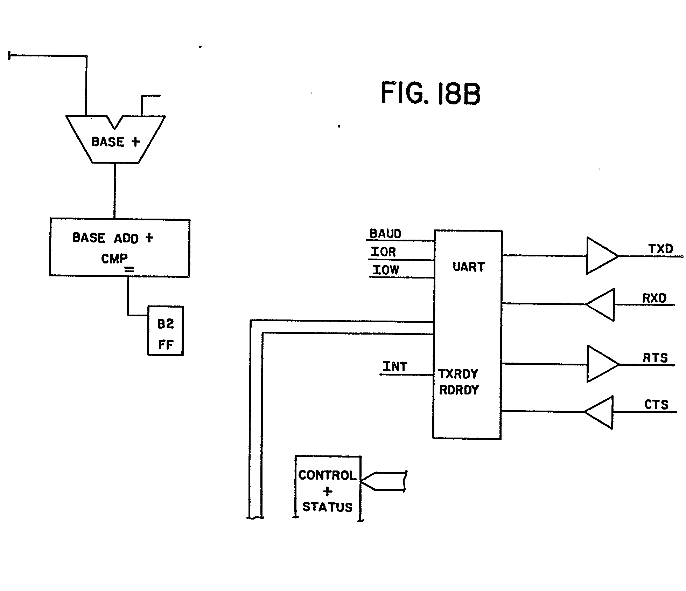

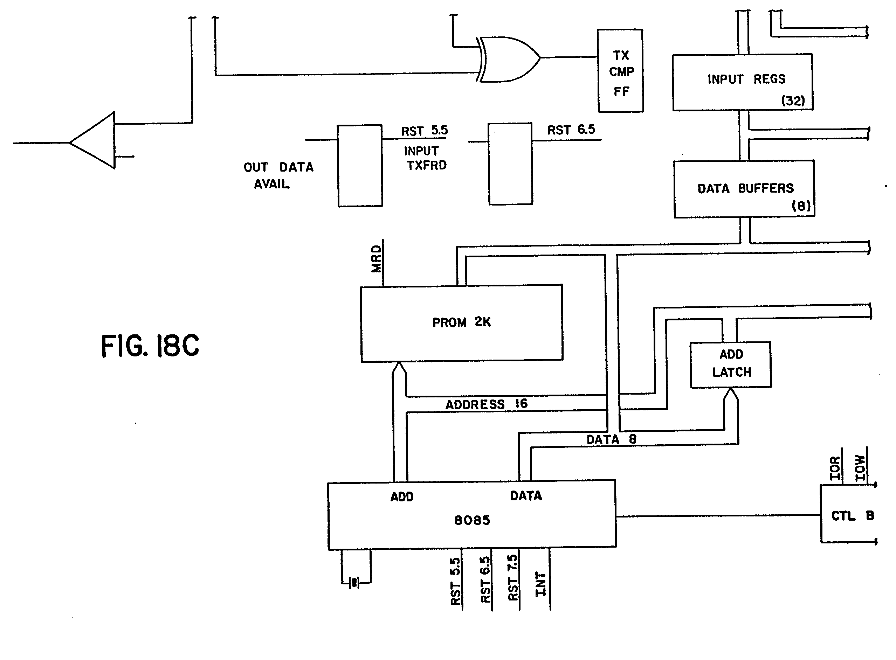

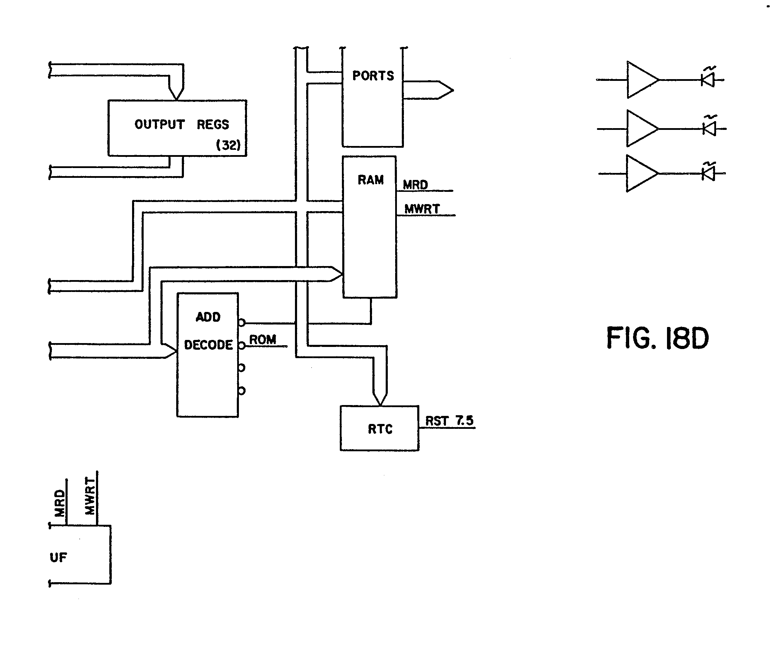

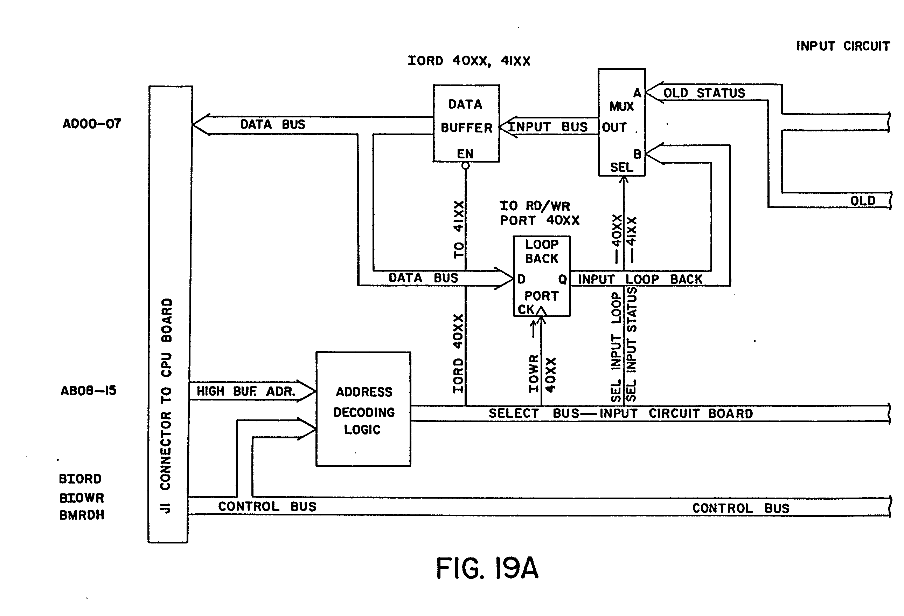

As seen in FIGURES 1 and 2, the input module 38 contains eight 115 VAC isolated inputs. Each input draws a wetting current that inhibits the accumulation of contaminants on the surface of the associated contacts used in the push buttons, limit switches, pressure switches, or other similar switching devices (not shown). The input signals 33 have characteristics as set forth in Table lA. FIGURES 19a-19B illustrate a detailed block diagram of the input module.

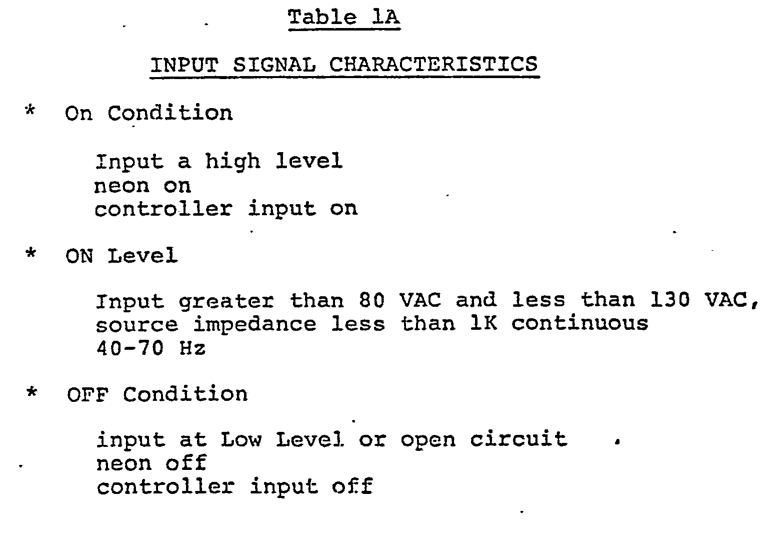

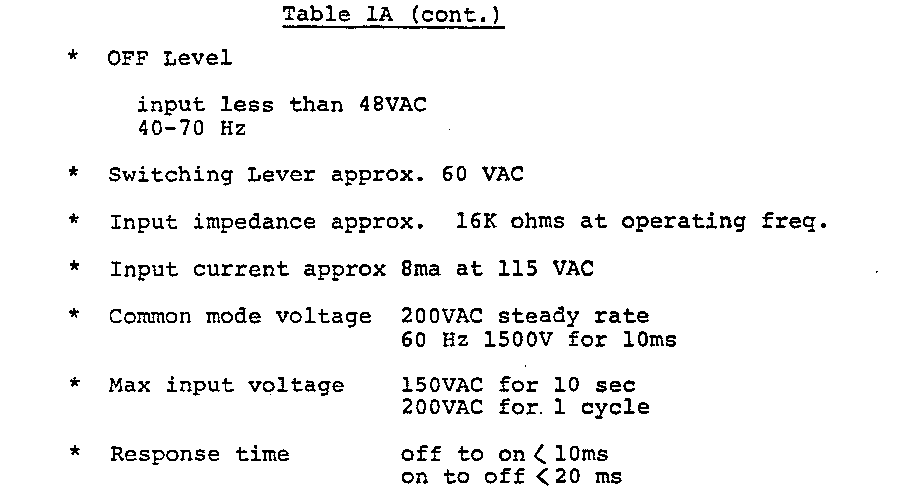

Input signals 33 can be used for conditional execution of either motion profiles or of chords within a profile, both forming part of the overall motion program as described in detail later. The inputs can also be used as interrupts so as to cause the immediate execution of a "priority execution" program. Thus for example, in a particular situation, receipt of a particular limit switch input can initiate a shutdown of the motor by the motion controller.

As seen in FIGURES 1, 2 and 3A, the motion controller can communicate with a programmable controller (PC) 36. The programmable controller can access motion controller status information via an I/O port such as an 1/0 to serial converter 50. The programmable controller can access status information including the servo motor position, servo motor speed, and internal errors to the motion controller. The programmable controller can also send command information to the motion controller such as to "Start", "Stop", "Initialize", "Continue from a Program Step", set a "Home" position, and set "Clear Memory Protect". The PC can also write information into internal registers of the motion controller where it in turn can be used as control flags, positional offsets, or other numerical data. The I/O to serial converter also may have a "feed through" mode so that communication messages can be left with a PC and then transmitted by the converter to the motion controller.

As seen in FIGURES 1, lA, 2, and 3A, overall programming, monitoring and editing of the motion program is performed through a programming panel 46, such as the Modicon P190 ™ Cathode Ray Tube (CRT) Programming Panel. As seen in FIGURE 12, such a programmable panel has keyboard 43 that includes a plurality of software labeled keys 45, the labels displayed on the CRT screen 51 in a lower portion 57 thereof. An error message line 73 is also included. Detailed information concerning the P190 ^{TM} Programming Panel is contained in the "₅₈₄ ^{TM} _{U}ser's Manual", published by the Modicon Division of the present assignee. This publication is incorporated herein by reference.

The general capabilities of the programming panel are set forth in Table 1B.

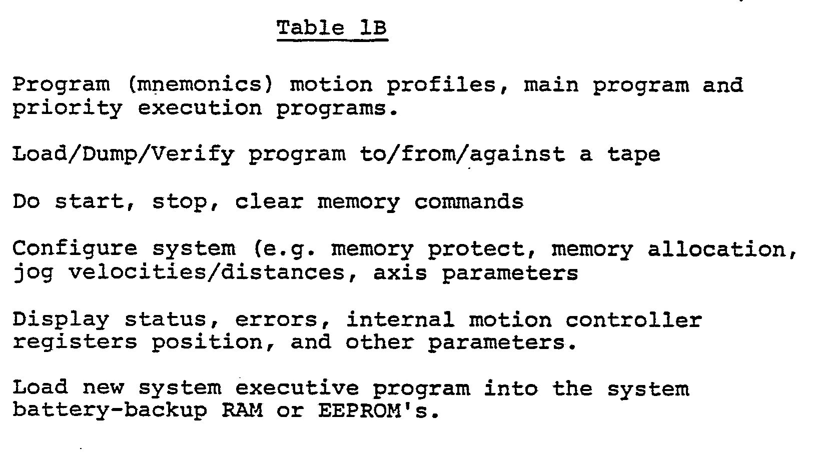

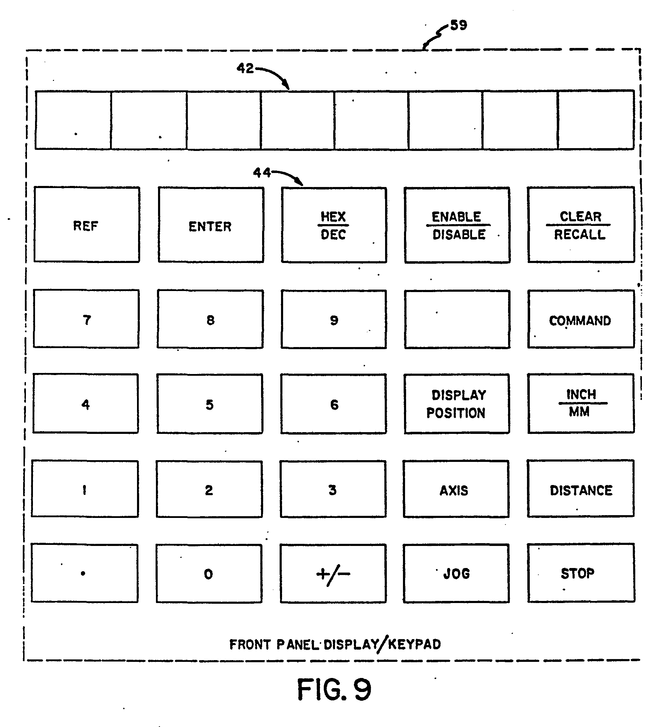

In addition, the machine operator can control the position, speed and direction of the interconnected servo motor with external switches under a "manual" or "jog" mode while the motion controller accurately tracks the motion position. As best seen in FIGURE 9, these switches are part of a front panel key pad 44 of the motor controller. The key pad in combination with a front panel display 42, form a register access panel 59.

As seen in FIGURES 1 and 2, there is also an output module 31 forming part of the motion controller where output signals 40 are converted to provide up to eight discrete output signals 40' to drive solenoids, motor starters and other devices up to two amperes. The eight output circuits associated with the module are divided into two groups, each containing four circuits. The groups are fully isolated so that different 115 VAC sources can drive each group.

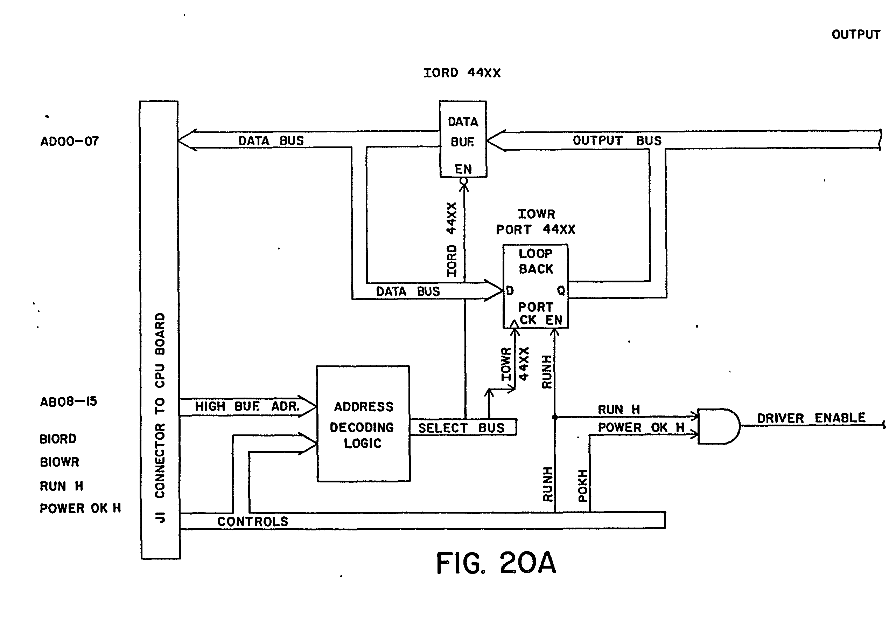

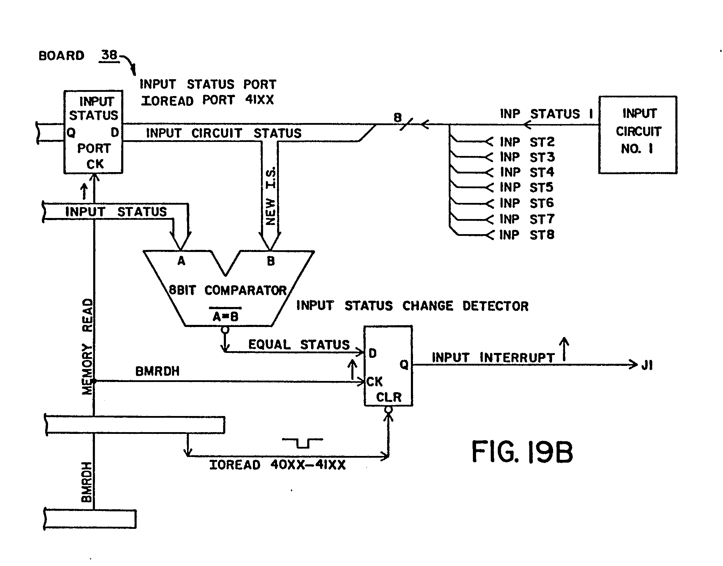

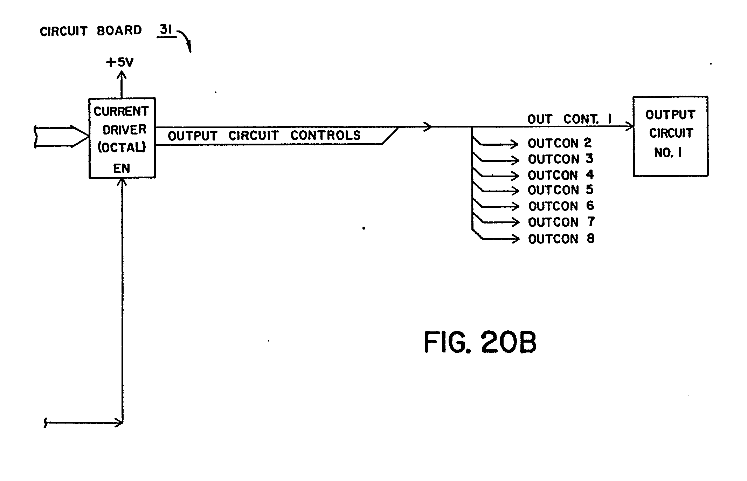

The output module uses eight triacs to switch the AC loads. Self-contained damping networks and voltage limiting resistors suppress line voltage spikes and prevent false triggering. The output signal characteristics are set forth in Table 1C. FIGURES 20A-20B illustrate a detailed block diagram of the output module.

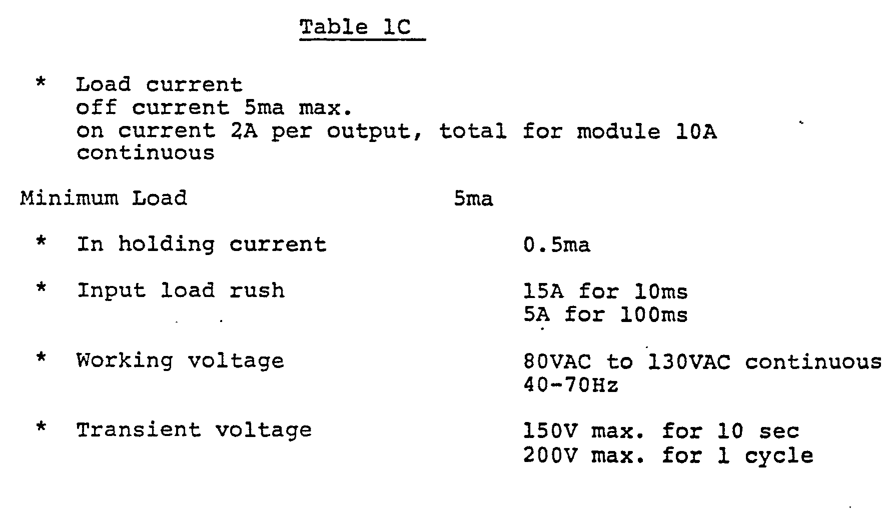

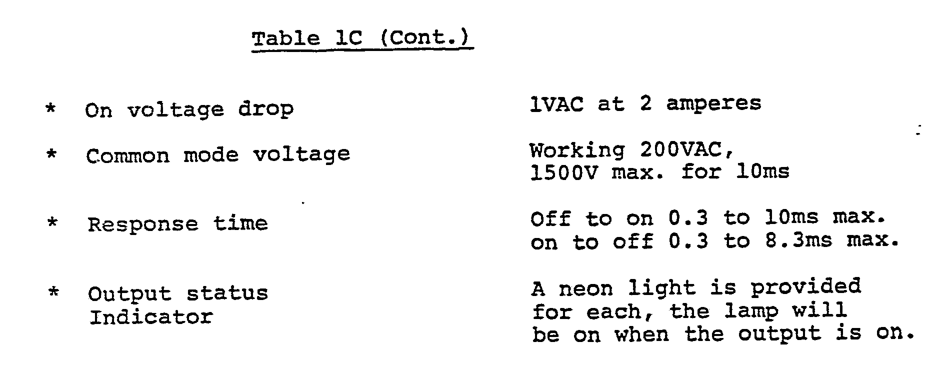

The outputs are set to indicate values immediately upon execution of an appropriate motion controller command or chord and stay in that state until the next such command is executed. Thus the motion controller can be programmed so that upon completion of a particular chord, one or more outputs change state so as to energize or de-energize some external device(s).

As best seen in FIGURE 9, the register access panel 59 can also be used to do the same types of operations as those which can be performed by an interconnected programmable controller. Such functions are set forth below in Table 2.

The general philosophy of the front panel is that the first digit entered is normally used to designate the type of operation to be performed. For example, a "zero" in the most significant digit (MSD) with a register/coil number in the other digits accesses the appropriate register/coil. The clear/recall key can be used to bring back the number of the register/coil whose contents the operator is viewing. Furthermore, several keys of the key pad can be used in a certain order to designate functions. For example, depression of the keys "AXIS", "1", "JOG", "DISTANCE", AND "2", causes axis 1 to move a user designated distance as specified by the number 2.

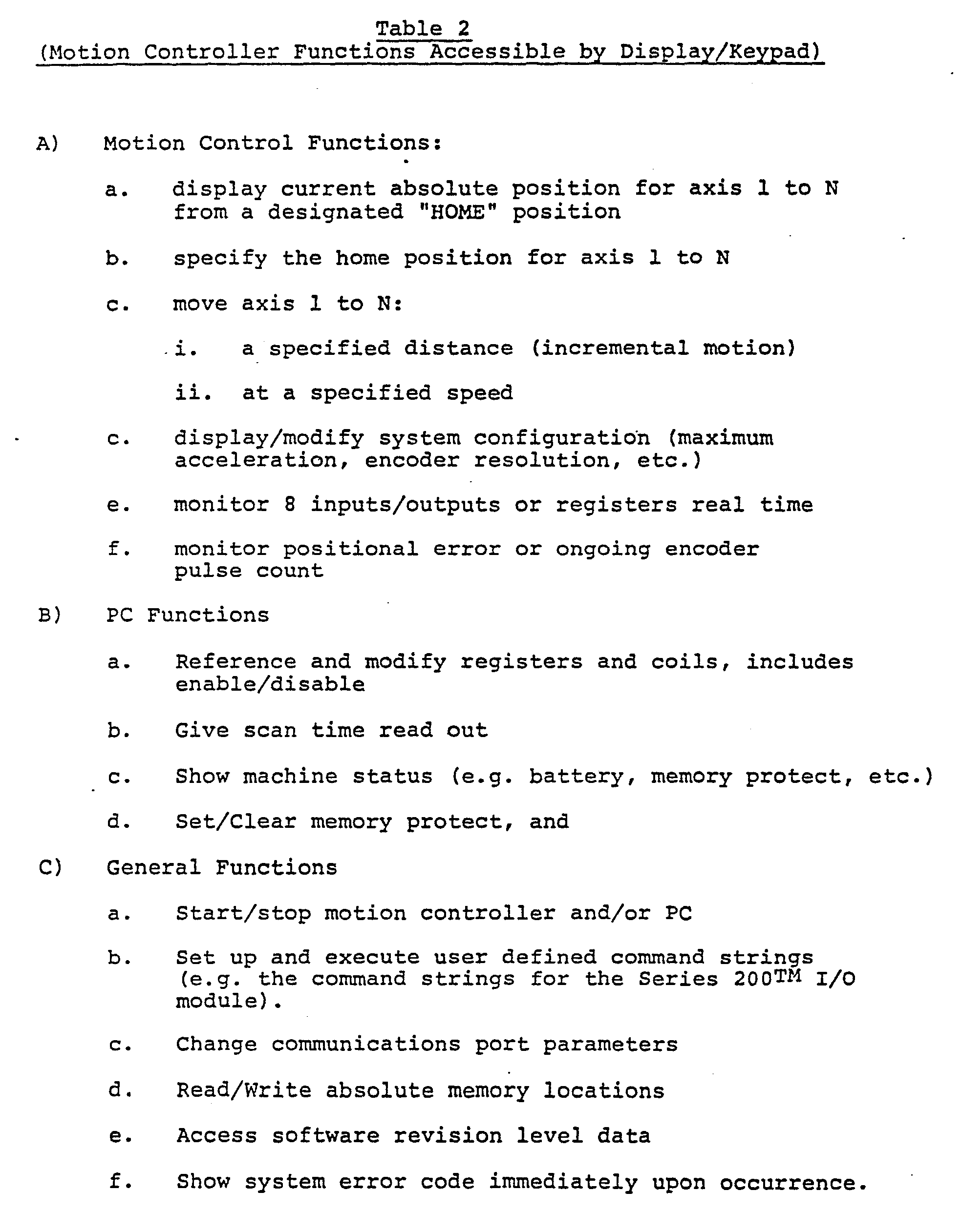

A command such as "AXIS", "2", "JOG" and "3" causes axis 2 to move at one of nine specifiable speeds; in this case the speed designated by the number 3. If the number 5 is later depressed, axis 2 would then move at the speed designated by that number. The number "0" causes the motion to stop but does not end the jog interaction. To do so, the "STOP" key is used. All of these keystroke operations are performed in the manual or "jog" mode by first depressing the "STOP" key.

In general, the direction of the motor is in the "+" direction unless the "+/-" is hit to change the direction.

In order to set such functions as the "SET HOME" position and the "START CONTROLLER" sequence, the "COMMAND" key is first depressed followed by the number corresponding with the particular function desired. Multiple sequential depression of the "STOP" key can be utilized as an emergency stop action although a separate emergency "STOP" key can also be utilized, although not shown in FIGURE 9.

Also, although.not shown in FIGURE 9, the key pad 44 can be divided into logical areas which can be indicated with color coding. Thus the number keys can have one color, the command key can have another color, the "STOP" key can have a third color and the remaining programming keys can have a fourth color.

The display 42 shown in FIGURE 9 shows the depression of the number keys and can also be used to indicate depression of the other keys of the key pad 44. Also status information from the motion controller can be displayed on this display.

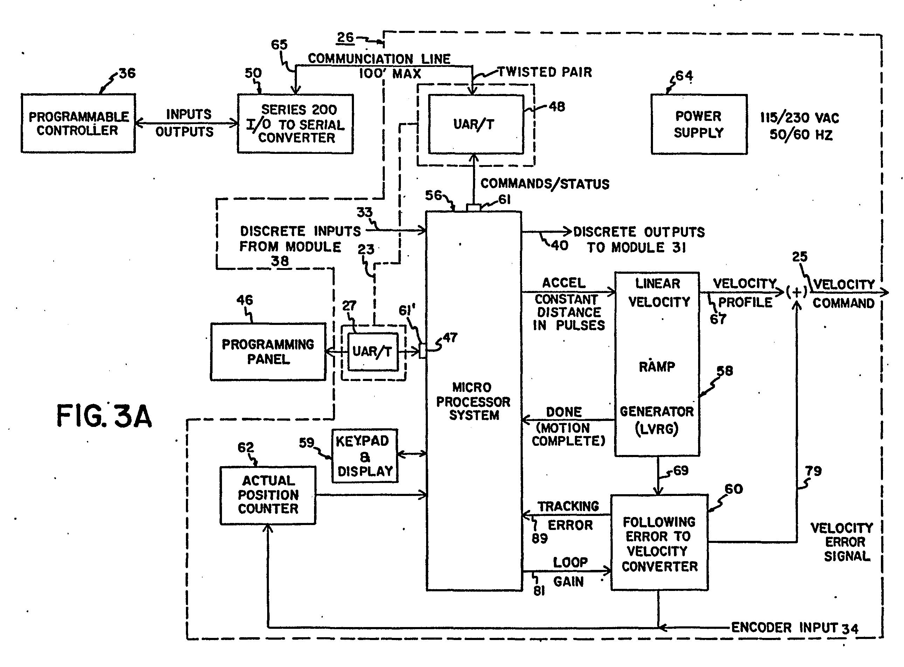

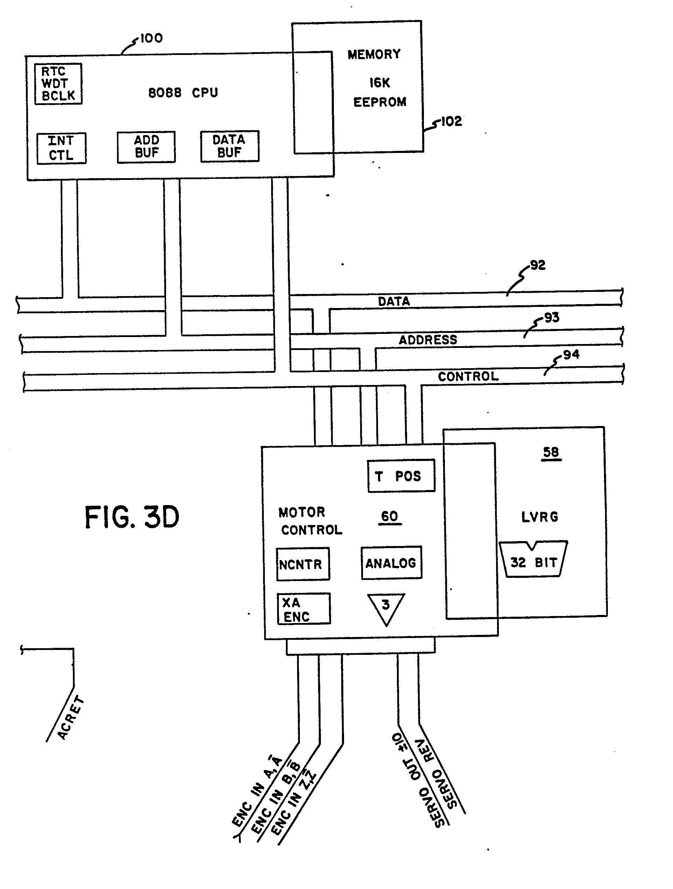

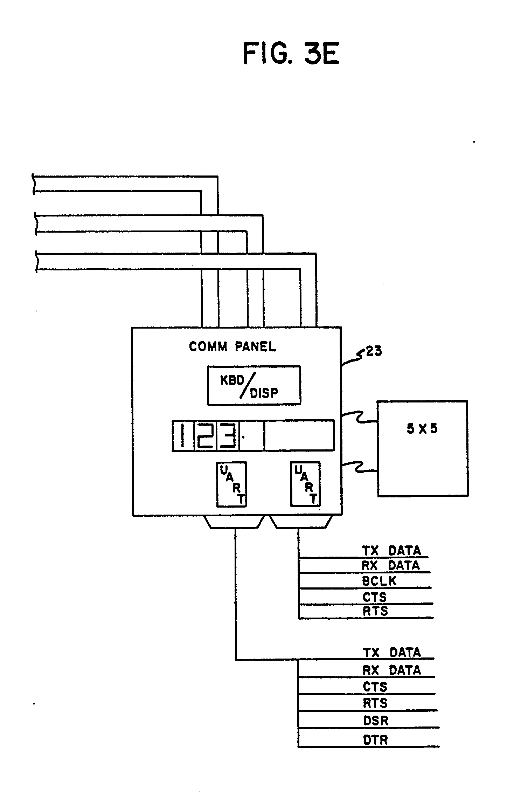

As shown in FIGURE 3A, the motion controller has two communication connectors 61 and 61'. Connector 61 is associated with a universal asynchronous receiver/transmitter (UART) 48 that has a twisted pair output 49 for connection to an I/O serial converter 50 which interconnects with the programmable controller 36. Connector 61' also is associated with an RS 232 port 47 for connection to programming panel 46.

Furthermore, the motion controller incorporates four programmable process timers, configurable by the user to any desired value. In operation, one or more of the process timers are re-started every time the motion program returns to the beginning. These timers are used in part to insure proper execution of the user motion program.

FIGURE 2 is an embodiment of the motion controller interconnected to a stepper motor 52 instead of DC motor 21 (FIGURE 1). In this configuration, a translator 53 is used to drive the stepper motor rather than the DC servo driver 24 associated with motor 21. The motion controller in this configuration generates clockwise or counter-clockwise pulse outputs 54 and 55 to drive translator 53 rather than producing a plus to minus 10 volt maximum signal for the velocity command output 25 (see FIGURE 1). The incremental position encoder need not be used. The inputs and outputs associated with the motion controller as well as the interconnectable programmable controller and programming panel are the same as for those shown in the configuration in FIGURE 1.

The following detailed description of the motion controller is however directed to its use with a DC servo motor. One axis is controlled, though its extension to multiple axes is readily apparent to one of ordinary skill in the art.

### Detailed Motion Controller Description

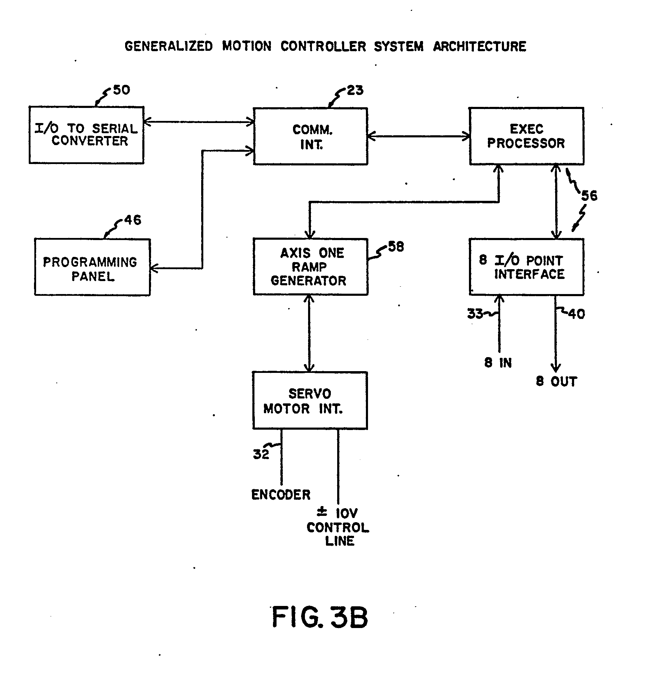

A complete functional block diagram of the motion controller 20 is shown in FIGURE 3A, with a generalized system architecture shown in FIGURE 3B. Thus it is seen that the motion controller comprises a microprocessor system 56, a linear velocity ramp generator (LVRG) 58, a following error to velocity converter (or motor controller) 60, input module 38, output module 31, an actual position counter 62, a communications system 23 with two universal asychronous receiver/transmitter (UART's) 48 and 27., and a power supply 64.

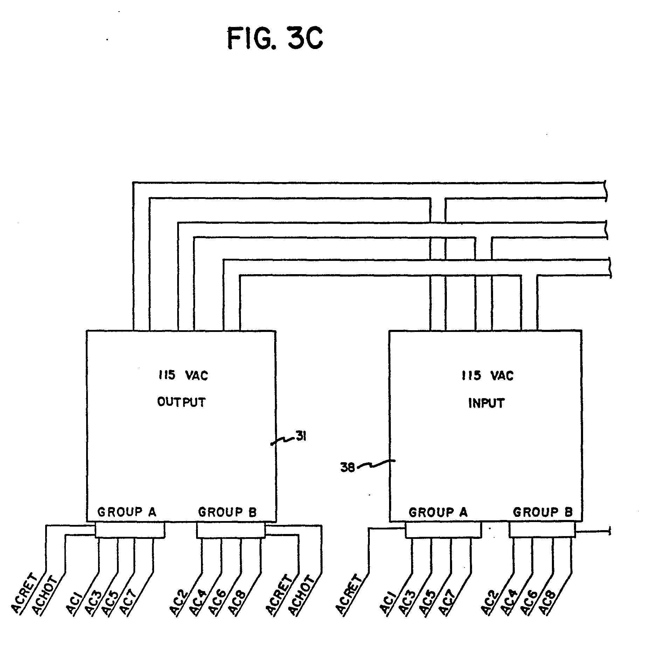

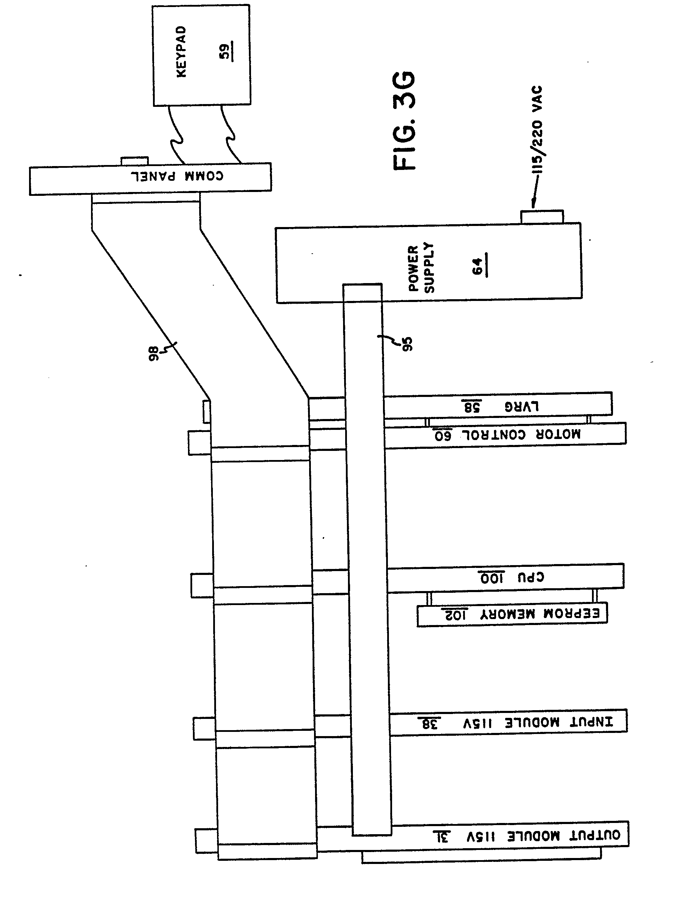

FIGURES 3C-3E combine to illustrate the data bus 92, the address bus 93, and the control bus 94 interconnections between the components forming the motion controller shown in FIGURE 3A. In addition, FIGURE 3G shows the electrical cable interconnects for the motion controller shown in FIGURES 3A and 3C-3E. Thus a power cable 95 provides power from supply 46 to LVRG 58, motor control module (following error to velocity control) 60, central processing unit (microprocessor system) 56, EEPROM memory 57, input module 38 and output module 31. A ribbon cable 98 also interconnects these components with a communications panel or system interface 23, which also connects to integral keypad 44.

Associated with the motion controller is an input/ output to serial converter 50 (which may be considered part of the motion controller), a programmable controller 36, and a programming panel 46.

### Microprocessor System

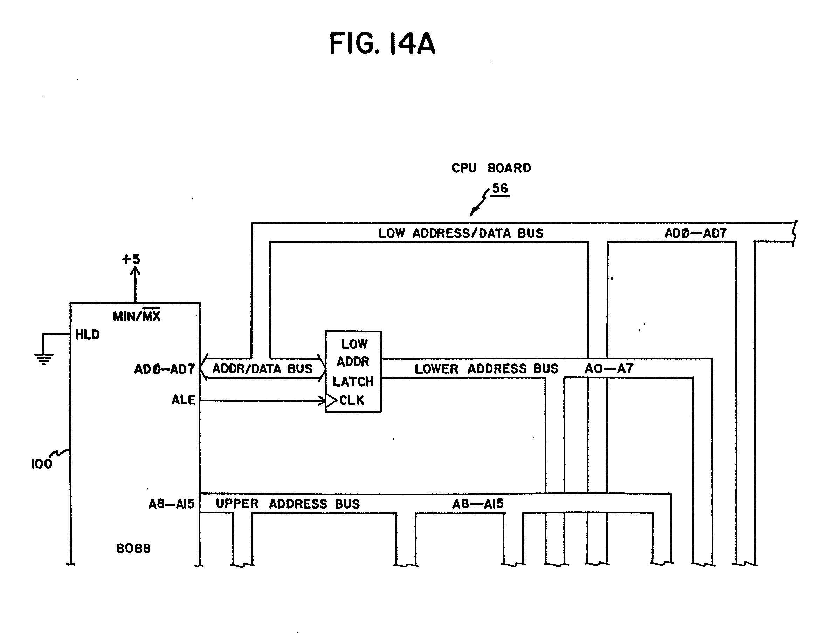

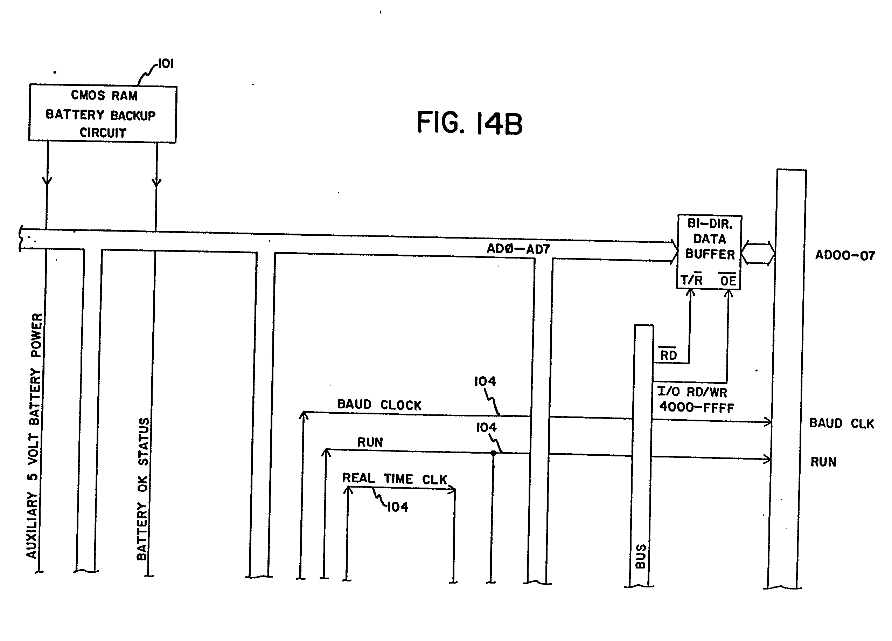

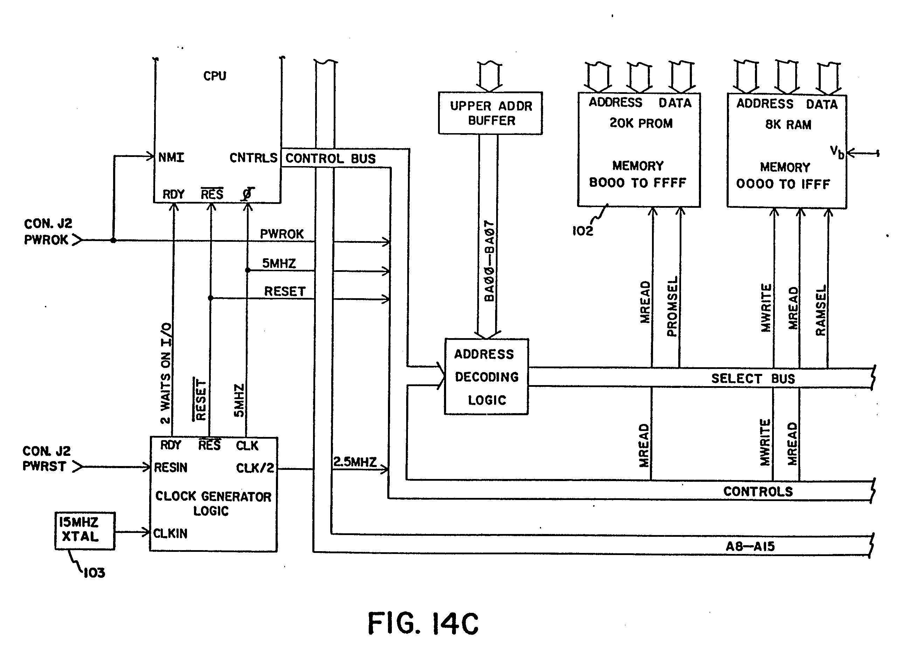

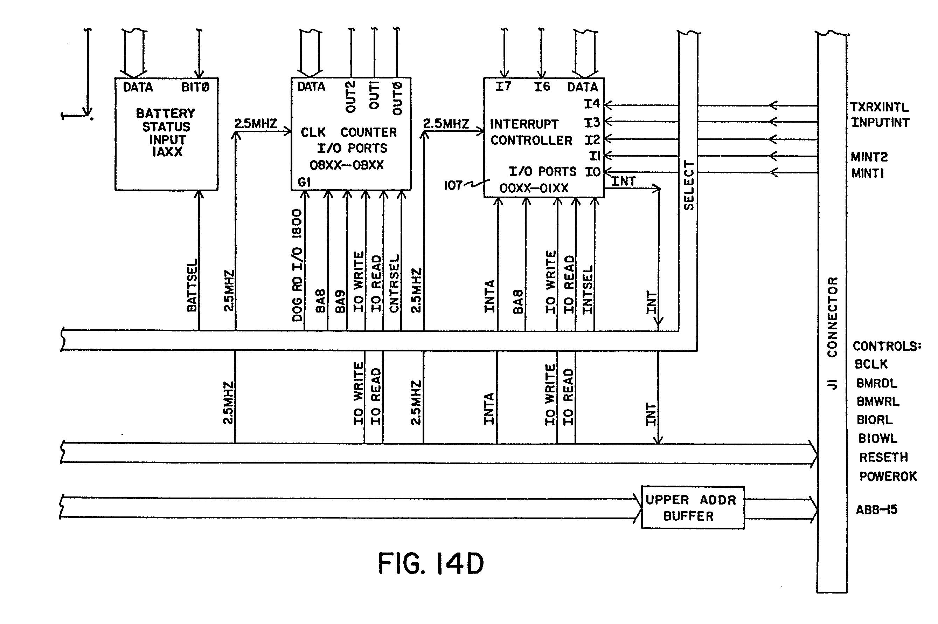

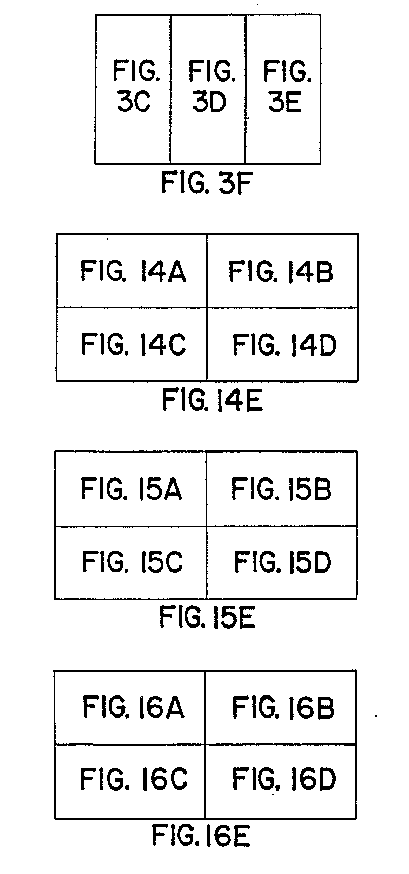

As shown in FIGURES 3A, 3C-3E and 14A-D, the microprocessor system 56 is the heart of the motion controller. All other subsystems are connected to it. The microprocessor system includes an eight bit microprocessor 100, a battery backup random access memory (RAM 101), and a 16K or 20K electrically erasable programmable read only memory (EEROM) or erasable PROM (EPROM) 102 in which the motion controller firmware resides.

The microprocessor system includes a crystal clock 103, and several clocks 104 for hardware timing and a software real time clock 105 in addition to programmable input/output (P I/OP) ports 107 used with buses 92-94 (see FIGURES 3C-3E) to connect the remaining subsystems.

### Communication System

As seen in FIGURES 3A, 3B, and 3C-3E, the communication system or interface 23 connects the microprocessor system to an interconnectable programmable controller (PC) 36 and/or an interconnectable programming panel (PP) 46. Commands are received from the PC or PP while status information is sent from the motion controller to the PC or PP. A programmable controller 36 uses four 16-bit registers (two IN, two OUT) to communicate to the I/O to serial converter 50 which passes the information to and from the PC. A twisted pair of wires 65 connects the UAR/T 48 with the I/O to serial converter 50. One pair of registers sends commands and data to the motion controller while the second pair of registers sends desired status and data from the motion controller to the programmable controller.

In operation, the interface to the I/O to serial converter 50 is performed by decoding transmissions sent by the programmable controller to the motion controller and converting the data (second register) into two, eight bit, serial numbers for transmission to the serial to parallel converter 48.

The programming panel interface 27 of the communications system 23 has a universal AC asynchronous receiver/transmitter (UAR/T) for receiving incoming serial commands. The UAR/T interrupts the microprocessor system to allow the microprocessor system to read the incoming commands. For outgoing status reports, the interface receives parallel data from the microprocessor system and converts it into serial data.

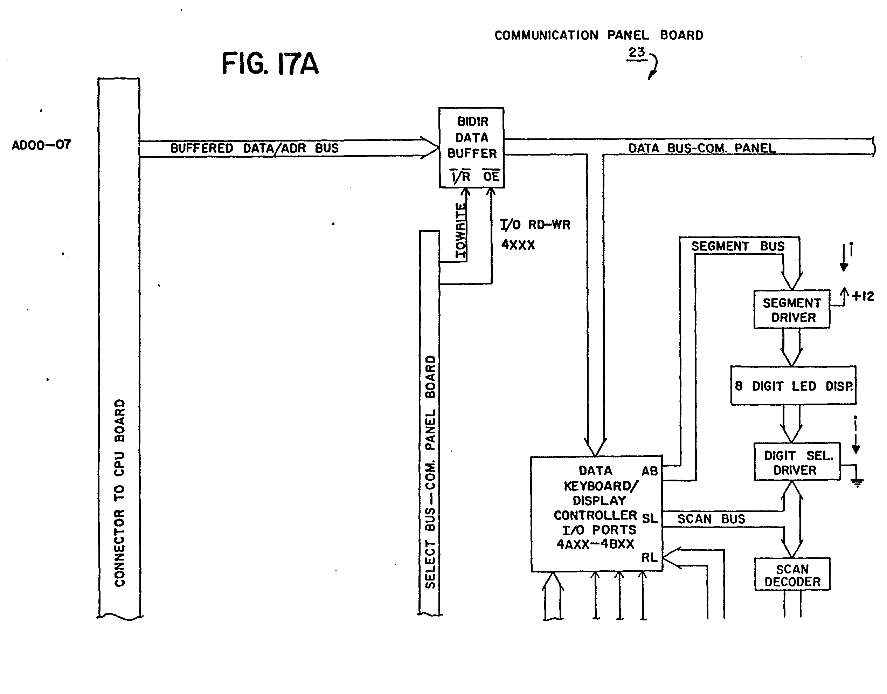

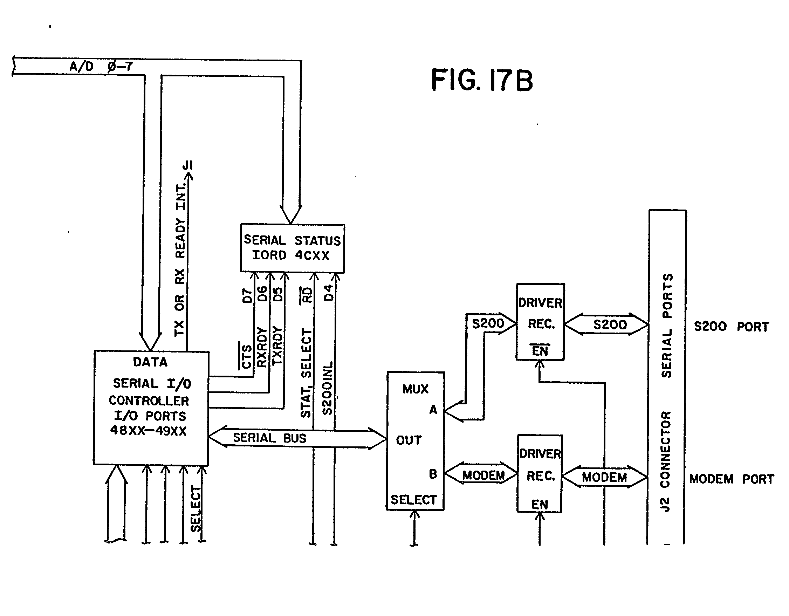

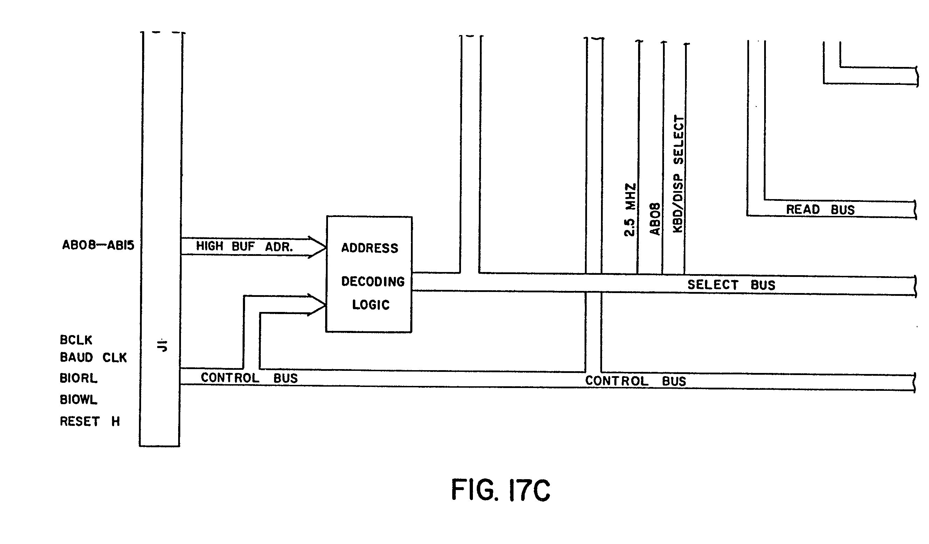

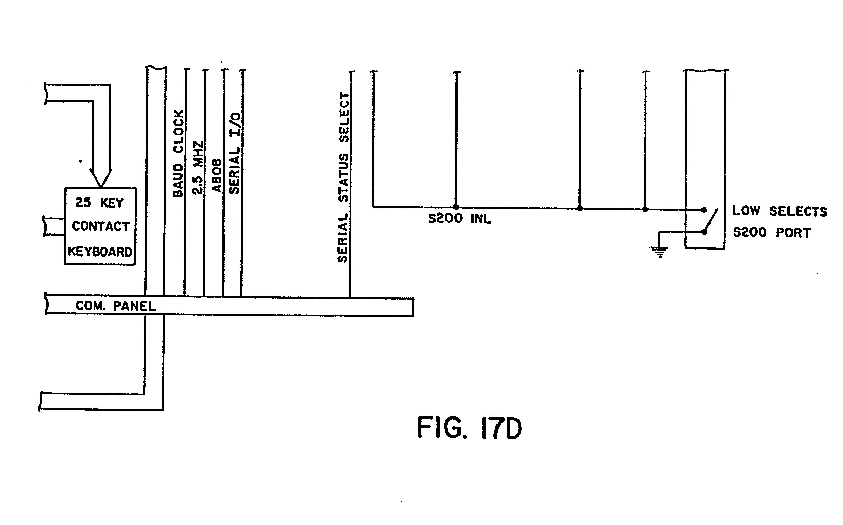

A detailed block diagram of the communication system 23 is shown in FIGURES 17A-17D while a detailed block diagram of the I/O to serial converter 50 is shown in FIGURES 18A-18D.

Thus the motion controller accepts channels from the programmable controller by the I/O to serial converter 50. These commands permit the programmable controller to monitor position and status information, to start, stop and proceed from hold information, to read and write internal registers of the motion controller, and to perform other data transfers with the motion controller. The I/O to serial converter 50 physically occupies one I/O slot of the input/output system such as the Series 200 TM I/O system manufactured by the present assignee. Module 50 uses two input and two output register addresses with the output register used to pass commands and data to the module 50. Module 50 communicates to the motion controller so as to designate a command and then returns an echo of the command and any data requested by the two input registers. Such a process is normally completed within one scan of the programmable controller when the communication port is set to 19.2 K baud.

The two output registers use the format shown in Table 5.

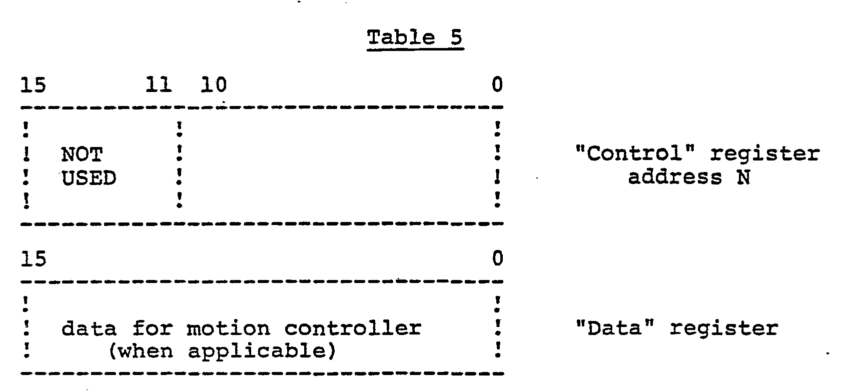

The commands permitted are set forth in Tables 27, 28 and 29. Table 27 contains commands that return data; Table 28 contains commands that require data; and Table 29 contains commands that perform a function.

The input registers appear in a manner as set forth in Table 30.

### Linear Velocity Ramp Generator (,LVRG)

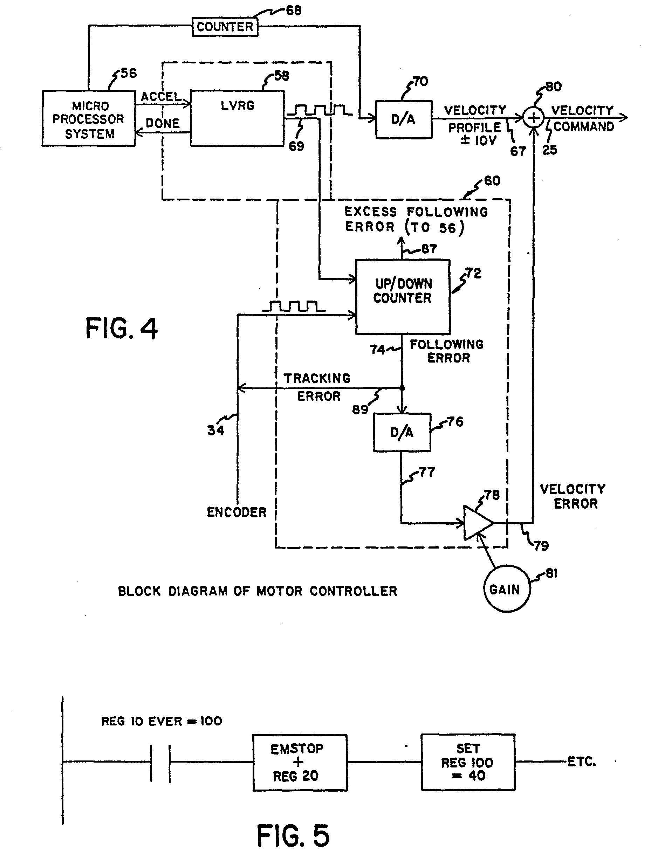

As shown in FIGURES 3A and 4, the linear velocity ramp generator (LVRG) 58 operates to generate an output velocity profile signal 67 indicative of the particular motion required of the interconnected motor. Reference to FIGURE 4 shows that the LVRG generates a pulsed output 69 corresponding to a desired velocity or acceleration. Also shown is a counter 68 that connects between microprocessor 56 and a digital to analog converter 70. The D/A converter generates an analog signal having a maximum amplitude of + or - ten volts. The output 69 from the pulse generator is connected to an updown counter 72 comprising part of the following error to velocity converter 60. Also connected to the updown counter is the encoder output 34 from the incremental position encoder 32 (see FIGURE 1). The output 74 from the updown counter 72 represents what is known as the "following error". This output is a series of pulses related to the difference in the pulses received by the UP and DOWN inputs of the updown counter 72. The following error to velocity converter 60 further includes a digital to analog converter 76 for generating an analog output 77 related to the digital pulse output 74 representing the following error. This output is connected to an amplifier 78 having an output 79 which is summed with the output 71 from the D-A converter 70 at summing junction 80.

As seen in FIGURE 4, a gain input 81 is received by the amplifier 78 so as to adjust the gain factor of the amplifier to correspond with that set by the user in the control program for the particular motion chord under execution.

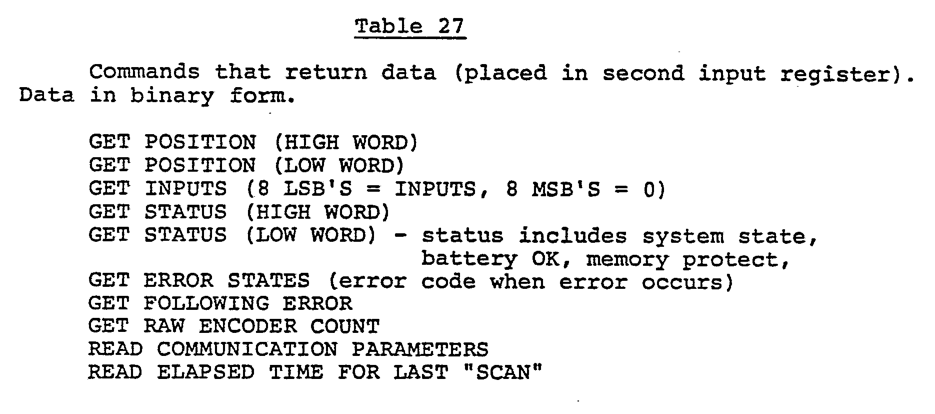

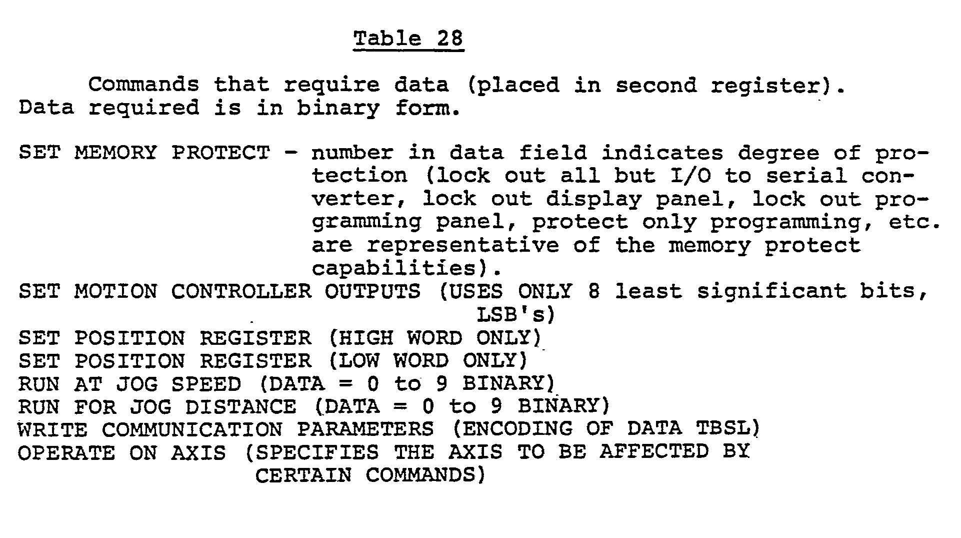

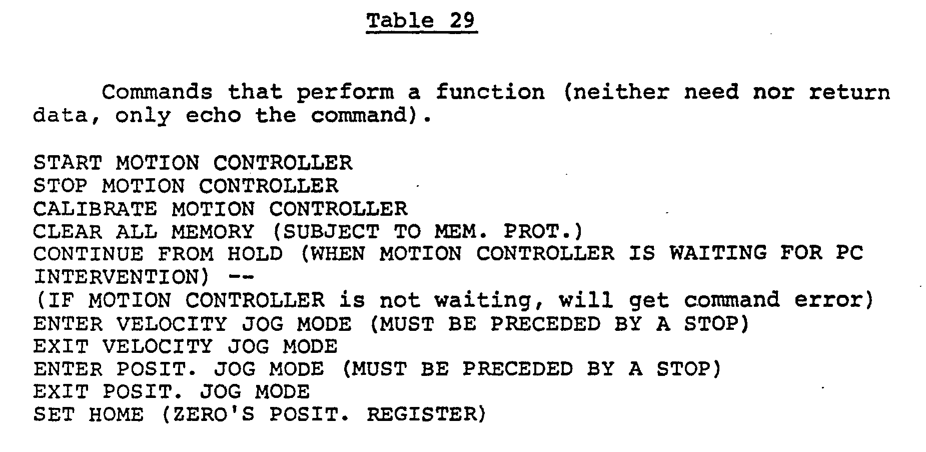

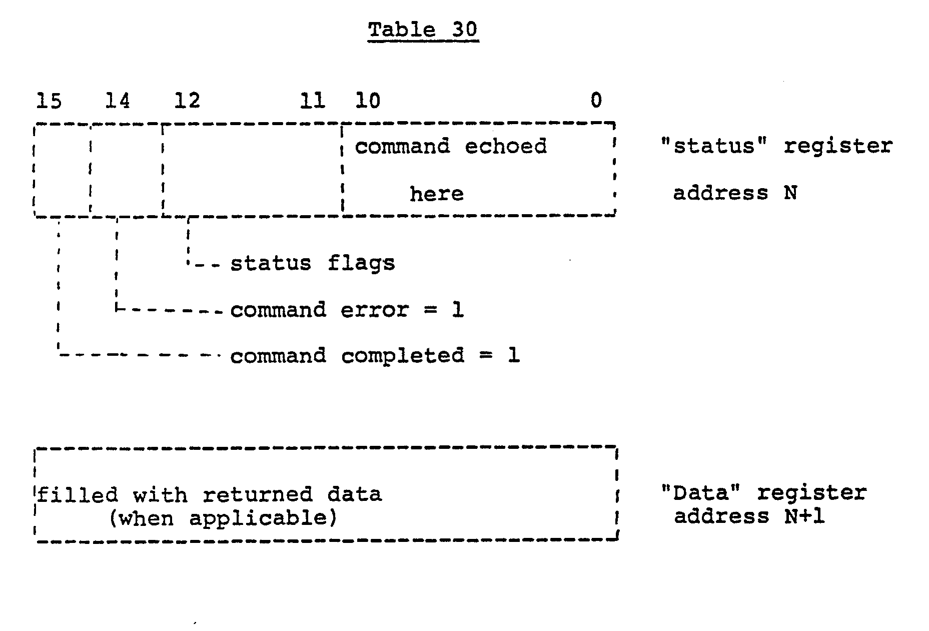

This gain is generated by the microprocessor system 56 as best seen in FIGURES 3A and 14A-14D. The output 25 from the summing junction is the velocity command signal which is connected to the DC servo driver 24 as best seen in FIGURE 1.

As seen in FIGURES 3A and 4, the following error 74 also represents what is called the tracking error and is connected by line 89 to the microprocessor system 56.

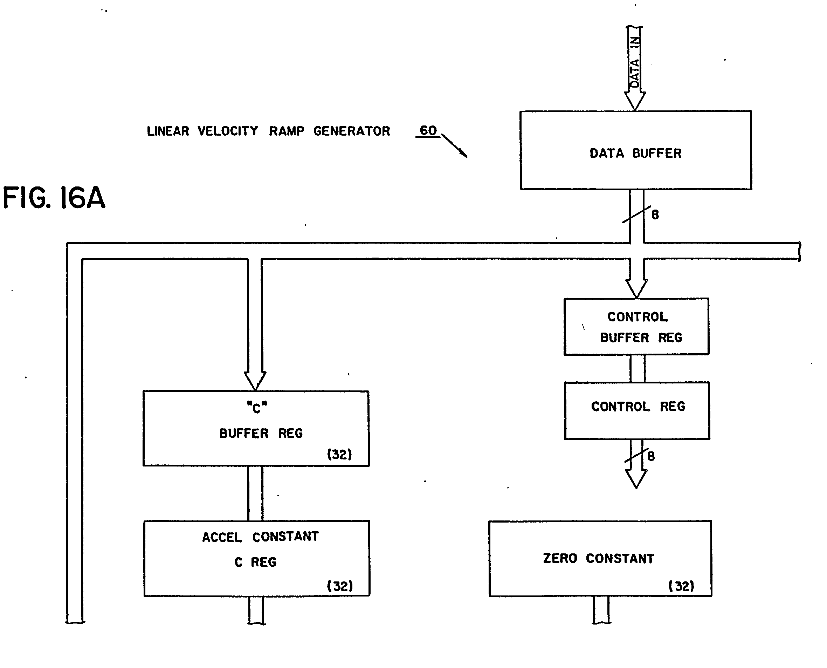

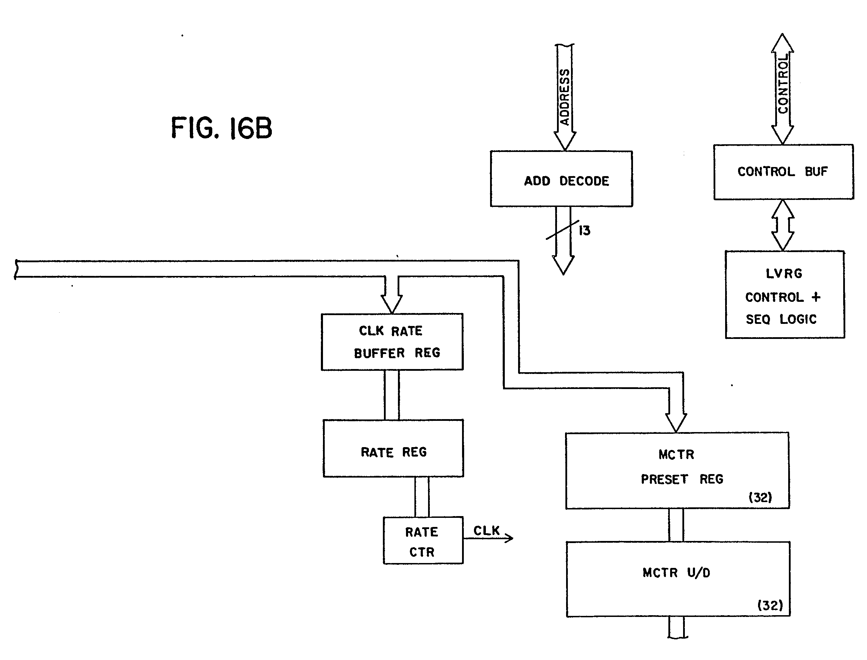

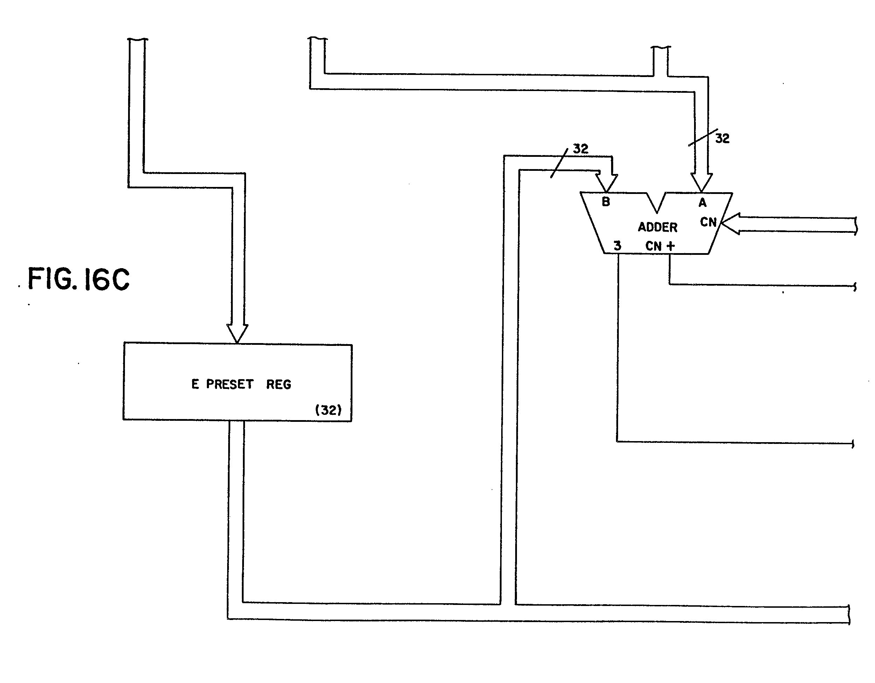

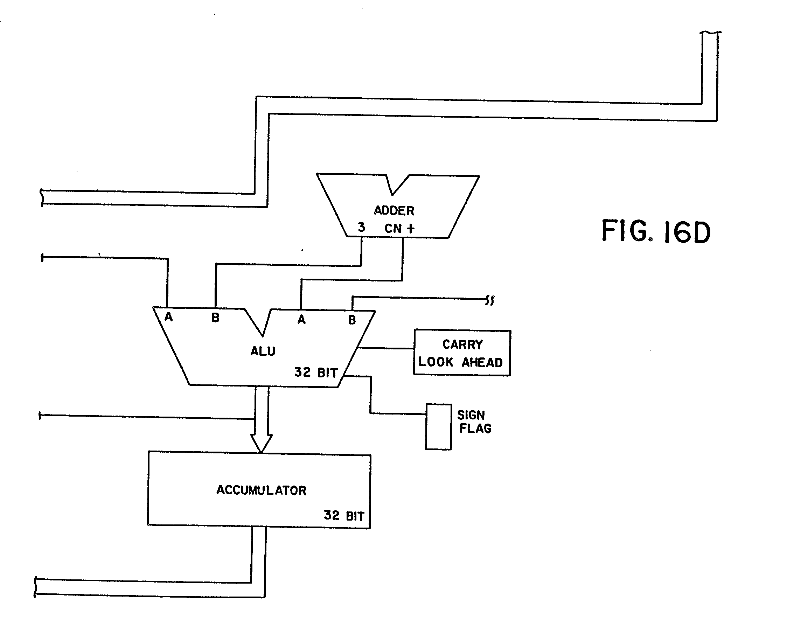

FIGURES 16A-16D combine to form a detailed block diagram of LVRG 58.

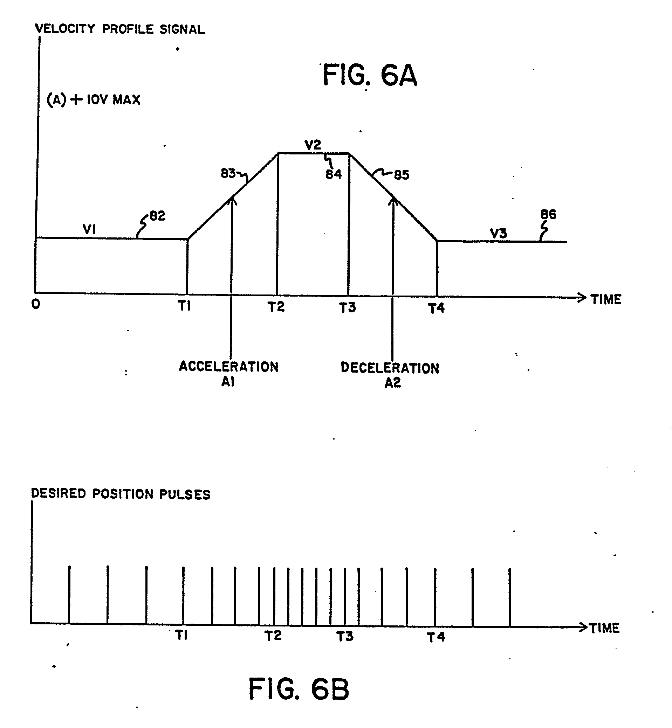

An example of the operation of the LVRG.is best seen in FIGURES 6A and 6B. FIGURE 6A is a plot of the velocity profile signal 67 as applied to summing junction 80. In this particular example, prior to time tl, the velocity is Vl corresponding to some voltage. At time tl, an acceleration constant Al occurs for some distance Dl indicated by a number of pulses loaded into the LVRG. The velocity then ramps linearly upward until time t2 when the velocity and the distance Dl are attained. At this time, the acceleration ceases and the velocity V2 continues until time t3. At this time, a deceleration constant of A2 and a distance D2 are loaded into the LVRG and the profile ramps linearally downward until velocity V3 and distance D2 are attained. In FIGURE 6A, each segment 82, 83, 84, 85 and 86 represents a separate chord originally programmed by the user and executed by the LVRG under control of the microprocessor system.

The ramp generated by the LVRG is monotonic. The pulses that increment the velocity counter represent the acceleration. These pulses are generated in time along a square root curve. Such velocity change, dictated by classical mechanics, is commonly referred to as a linear velocity, and is so shown when plotted against position.

FIGURE 6B illustrates the corresponding pulses on output 69 (see FIGURE 4) as produced by the ramp generator 68. These pulses represent the desired position pulses and show a similar.ramp-up/slew/ramp-down if there was zero following error. These pulses could also be used with drive translator 53 in a stepper motor configuration of the motor control system as shown in FIGURE 2.

However, as will be discussed below, there is normally a following error associated with any desired position and this must be accounted for in order to properly drive the interconnected motor.

### Following Error to Velocity Converter 60

As best seen in FIGURES 3A and 4, the following error to velocity converter 60 generates a signal proportional to the difference between the desired position and the actual position of the motor. The square root of this following (or positional) error is taken to yield a velocity error signal at output 79 of amplifier 78.

The relationship defining the velocity error signal is obtained from the kinematic equations: 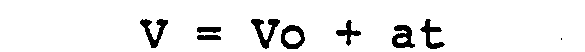 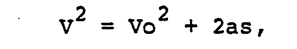 where V is the new velocity, Vo is the initial velocity, a is the acceleration, and s is the distance.

As explained above, the velocity error signal is summed with the velocity profile signal to drive the DC motor's velocity controller; that is, the DC servo driver 24 (see FIGURE 1). This error signal completes the position feedback loop and yields tight tracking of the desired velocity profile. FIGURE 4 illustrates the functional interaction as expressed by the above equations.

As shown in FIGURES 3A and 4, the loop gain (sometimes called gain) is used by the microprocessor to control the amount of velocity error signal that is summed with the velocity profile. The higher the gain, the greater the amount of velocity error signal for a given following error and thus the tightness of the control can be established by varying the gain adjustment. Such an adjustment can be made by the user for each chord as will be explained more fully below.

It should be noted that the condition of excess following error is indicated by output 87 when the following error exceeds plus or minus 4,096 in counts. This causes a system software error trap and the execution of an "if ever" routine.

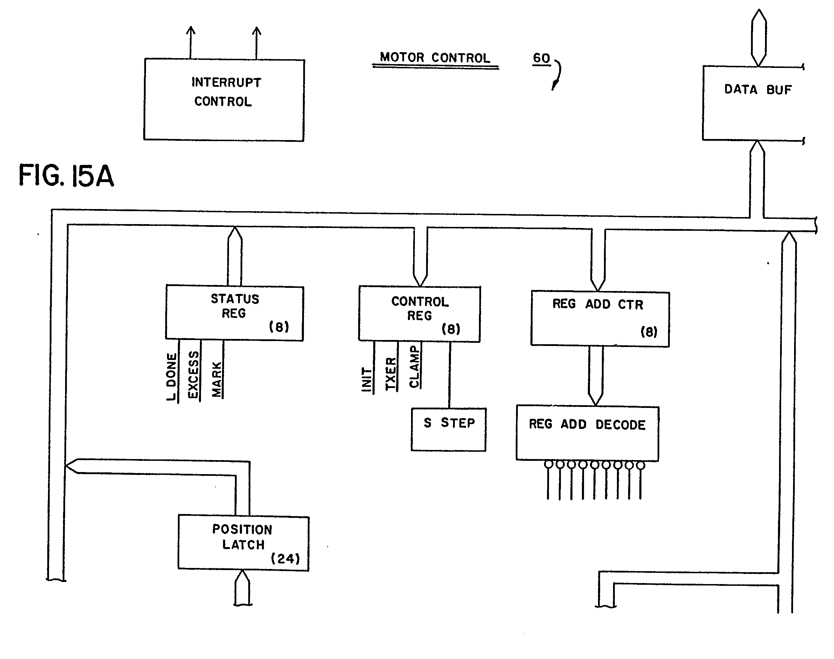

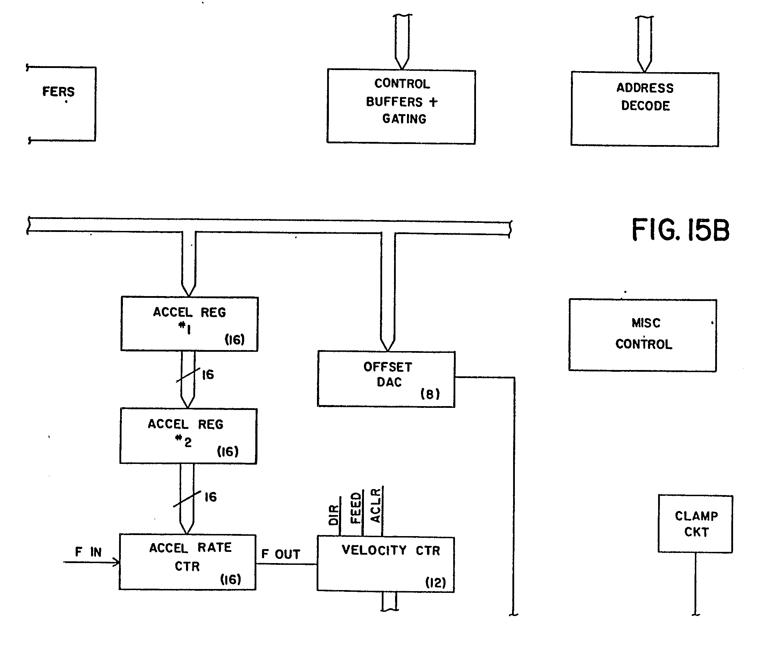

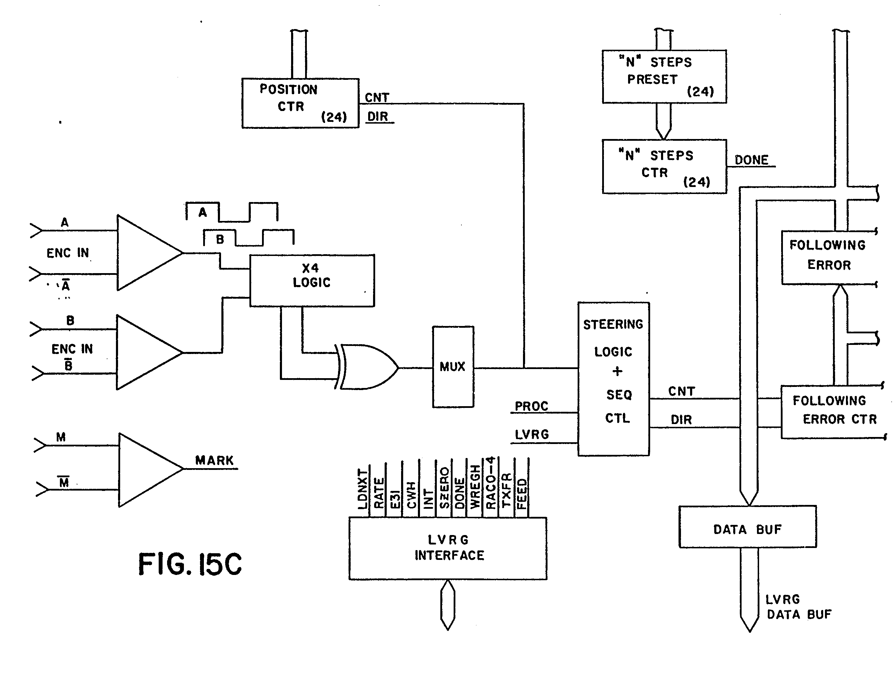

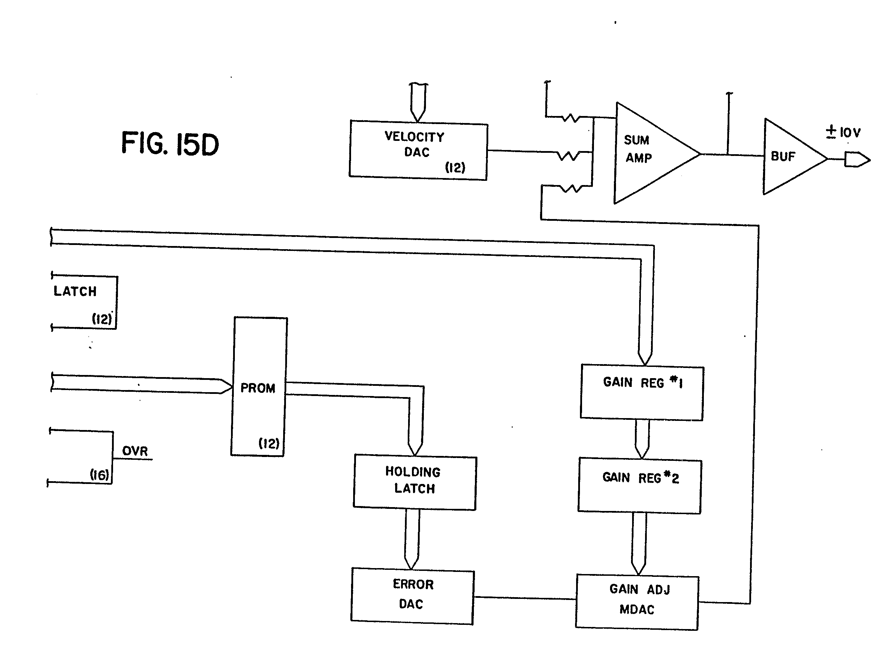

FIGURES 15A-15D combine to form a detailed block diagram of the following error to velocity converter, including its motor control functionality.

### Positiorion Tracking Subsystem

As shown in FIGURE 3A, a hardware counter 62 which may be part of module 60, tracks the relative actual position of the motor for up to 2²³ encoder pulses. The system software calculates the overall actual absolute system position.

The microprocessor system 56 shown in FIGURE 3A utilizes a 32-bit accurate absolute position counter in software by reading the hardware counter 88 at regular intervals.

### Discrete Inputs 33 and Outputs 40

As best seen in FIGURES 1 and 19A-19B, an input module contains eight discrete inputs. These inputs can be defined by the user for stops, limit switches, zero position limit switches plus and minus end of travel limits or for other purposes. All inputs generate interrupts to the motion controller 20 when they change state. If an input is not made part of a priority execution condition and it changes states, the program will not be interrupted and if that same input changes state again the first change may not be later utilized. FIGURES 19A-19B combine to form a detailed block diagram of input module 31.

As shown in FIGURES 1 and 20A-20B, output module 31 contains eight discrete outputs 40' that are also definable by the user as position activated cam switches. These outputs can change states upon the completion of any particular chord and can be used to energize or de-energize the externally connected devices. FIGURES 20A-20B combine to form a detailed block diagram of output module 31.

### Internal Watch Dog Timer

An internal watch dog timer (WDT) is updated by the software every 700 milliseconds. If the software fails to update the timers, they will timeout indicating a failure in the software. Such a timeout initiates a shutdown procedure that deactivates the RUN status line.

Four 16-bit system process timers are imbedded in the software. These timers can be set to any value and count down to zero in .01 second intervals. Expiration of these timers can initiate a trap to the priority execution program.

### Power Supply

As best seen in FIGUREs 3A and 3G, a power supply 64 typically operates on a 115/230 VAC, 50/60 HZ power so as to deliver plus five volts at 10 amperes, plus 15 volts at 1.5 amperes and -15 volts at 1.0 amperes to the other modules of the motion controller.

### Program Listing

Tables 31A-31H forming Appendix A comprise the program listing of the entire motion controller. This software combines with the hardware described above to function as a motion controller with capabilities as described herein. Table 32 lists the functional titles for Tables 31A-31J.

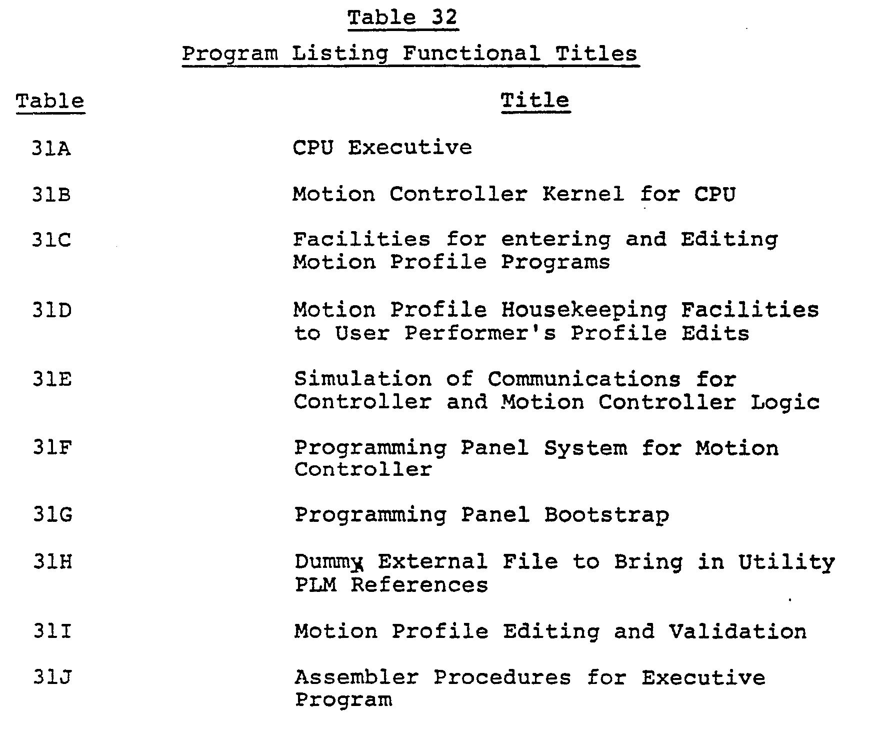

### MOTION CONTROLLER PROGRAMMING

The control engineer or other user of the present invention can, through an interconnectable programming panel such as the GOULD-MODICON P190 ^{TM} CRT Programming Panel, configure the desired overall motion of an interconnected device through use of a high level programming language.

The motion controller is configurable by the user to perform the functions as set forth in Table 3.

### Motion Profile Generation

This sub-section describes how a user creates a number of conditional sequential motions forming a subset of an overall motion program. Each such subset is called a "motion profile" and each unique motion a "chord". Each profile is assigned a unique name by the person creating it and these names become commands to the motion controller programming language as described in the next sub-section.

Editing involves the use of a "sliding window" to view each generated profile on the programming panel (see FIGURES 1 and 12), and also makes extensive use of default values and software label keys, prompts, and an assembly area to create each chord of the program. Editing philosophy is covered in more detail below.

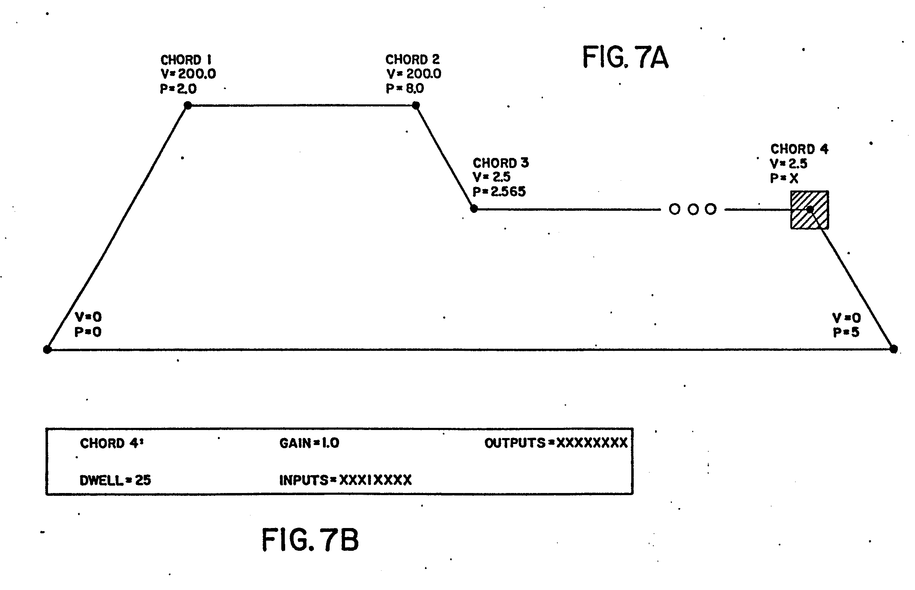

Each profile is required to end with a zero velocity chord and is assumed to have begun from zero velocity. A typical motion profile called by the label "GRIND" is detailed in Table 4 and FIGURE 7A. In the event that the final chord does not go to zero velocity, the internal program of the motion controller automatically supplies such a deceleration chord at the maximum permissible deceleration period.

Although a mnemonic version of the language is presented in the software contained herein, a pictorial version is also described using symbolic programming of the motion profile.

Thus the essential components of a motion profile are a unique name and from 1 to N chords, where N is an integer limited only by the amount of available memory.

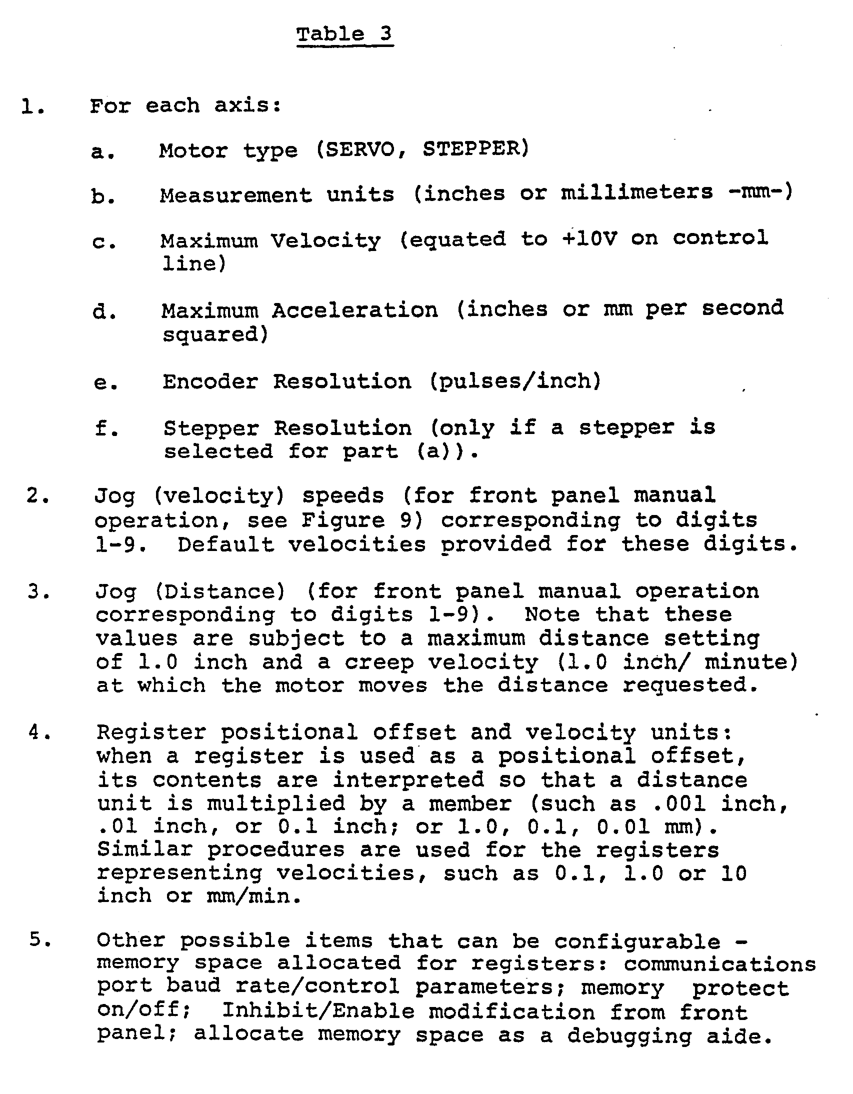

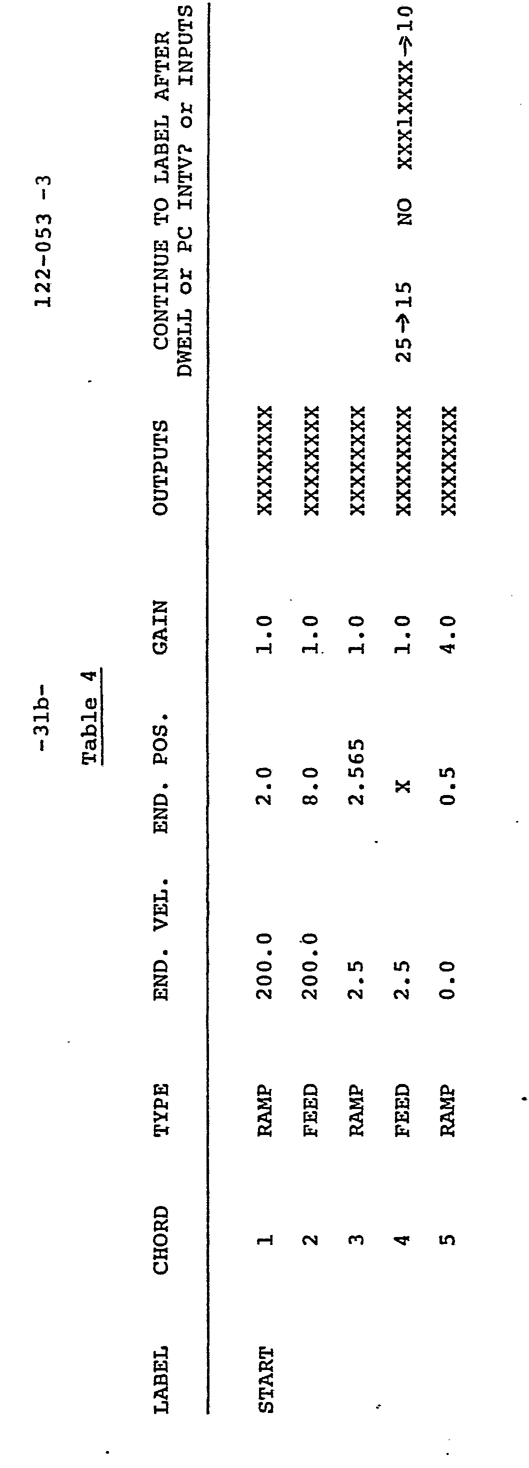

### Chord Description

Typical chords generated by the user have a format given in Table 4. Each of the columns in Table 4 is described below:

### LABEL

This portion contains an optional eight letter mnemonic to identify a chord that can be skipped by a decisional or permissive step. This label generally is used to identify the label for the motion profile.

### CHORD

In this column, a number is placed from one to "N", where "N" is an integer. The number is automatically selected by the motion controller software. This number is similar to the network number used in programmable controllers such as the Gould Inc., Modicon Division 584 TM Programmable Controller.

### TYPE

This column characterizes the chord as either a "RAMP", "FEED", "DWELL" or "SKIP". The particular type is determined by the user editing the motion program .

A "RAMP" designates a chord that changes motor velocity over a distance. A "FEED" designates a constant velocity over a distance. The "DWELL" and "SKIP" types are special cases of the "FEED" type since they represent zero velocity.

In particular, "DWELL" permits a specified duration pause at zero velocity. "SKIP" permits a change in the otherwise sequential execution of chords when at a zero velocity point. An example is where chord 35 is executed instead of chord 17.

### END VELOCITY

The END VELOCITY has no default value. In general it represents the velocity to be obtained at the end of the particular chord. The END VELOCITY is specified as up to XXX. XXXX inches or XXXX.XXX millimeters per minute. A "-" is used to specify the opposite direction if placed before the number.

### END POSITION

This parameter like the END VELOCITY has no default value. The end END VELOCITY the position to be obtained at the end of the chord. It can be specified by a number equal to XXX.XXXX inches or XXXX.XXX millimeters. The END POSITION can be appended to include an "A" to represent absolute position or a "R" to represent relative position. The letter "X" designates a "DON'T CARE" situation and is used when an undesignated final position is desired.

Furthermore, the register offset (Rl through R512) can be used as an offset to any position (designated as a + or R"N"). No register offset is permitted when a "DON'T CARE" (X) position is used.

### GAIN

The gain if not specified by the user defaults to a value of 20.0. Gains from 1 to 99 are permitted. The gain represents an amplification factor of the positional error. The higher the gain, the greater the effect of'the positional error with respect to the Velocity Command signal 25 sent out by the motion controller. The Velocity Error signal 79 is defined by the equation VE = GAIN ^{*} (square root (2.44 mV ^{*} Following Error counts)), (See FIGURE 4).

### OUTPUTS

The outputs if not specified by the user default to the value of XXXX XXXX. Positive logic is used in each of the eight outputs designated by either a logic φ, a logic 1, or "X", representing a "DON'T CARE" situation. If the "DON'T CARE" situation is selected for.a particular output, the output is not changed from the previous state. Outputs are set to indicate values prior to execution of the motion defined by the chord.

### CONTINUE TO LABEL AFTER

This statement is the blanket label for the three possible permissive conditions for performing conditional logic. These three conditions are then logically "OR'ed" together. If nothing is present in a particular column, then that factor is not involved in the conditional logic's Boolean equation. All three of the permissives default to a state of "not involved in equation" in case of non-use.

These three conditions can be used to cause a "FEED" type chord to terminate before its completion. Although theoretically usable with acceleration or deceleration "RAMP" type chords,, they are not so used in the preferred embodiment of the invention due to the complicated nature of generating the proper amount of pulses from the linear velocity ramp generator 58.

Thus for example, if a chord is progammed to have an end position of seven inches while moving at a rate of 200 inches per minute, a program input occurring part of the way through the seven inches would immediately cause the motion controller to proceed to the indicated chord (which is either the next sequential chord or the number "N" selected for the particular column). If the end position is equal to "X" instead of seven inches, then these permissive conditions are the only things except for the priority execution program (discussed below) that can take the user out of the programmed motion.

### DWELL (SKIP TO LABEL)

The DWELL permissive is a time delay stated in increments of 0.01 second (from 0 to 99999 times 0.01 second). This time delay, subject to other conditions, must expire before the chord designated by "N" can be executed. The DWELL is usually considered a "TIME OUT" when used with a non-zero velocity FEED and a "WAIT" when used with a zero velocity FEED. If the end velocity is zero, the end position for a feed is implicitly a "DON'T CARE". This in turn allows the motion controller to wait for one of the permissive conditions whenever a zero velocity feed is programmed. If not specified, the "N" should not be shown on the user's screen, but the program will go on to the next sequential chord. A default entry of this column is set for "NO ENTRY".

As shown in Table 4 (corresponding to FIGURE 7A), chord 4 specifies that after a DWELL of 25 time units chord 15 is to be next executed. The "N" in parenthesis following the number 15 merely shows that 15 represents the labeled chord number "N".

### PC INTV? (SKIP TO LABEL)

This column represents whether PC intervention is to be selected by the user. If selected, it indicates that the labeled chord is to be executed if an appropriate command is sent from a supervisory programmable controller. If a label or "N" is not specified, the next sequential chord is executed upon receipt of an appropriate command from the supervisory programmable controller. The default case for this column is no entry. That is, it.is simply ignored. The same is true for the other permissive condition types. If the particular chord has a zero velocity, the motion controller again waits for one of the three permissive conditions to occur before the next chord is executed. This permissive, like the DWELL, is subject to any other permissives occurring first.

### INPUTS (SKIP TO LABEL)

This column allows the user to designate one of eight inputs (see FIGURE 1) for causing the next chord to be executed. Positive logic is normally used. If this column is selected, the labeled chord ("N") is executed when the appropriate input is in the logic 1 state. If a label is not specified, the next sequential chord is executed upon receipt of the proper signal. Again the default case for this column is no entry; that is, it is simply ignored. This permissive is also subject to any other permissive occurring first. It is obvious to those skilled in the art that this permissive condition type could also be specified by Boolean combination of inputs.

In summary, the three permissive conditions, DWELL, PC INTERVENTION, and INPUTS, are all logically OR'ed so that the first condition satisfied causes the termination of the presently executed chord and the execution of the chord specified by the appropriate label, or if no label is specified, by the execution of the next sequential chord.

### PROGRAMMING PHILOSOPHY

It is readily seen that the basic philosophy in programming the motion controller is to use default values for all columns in the selection of chords except for the END VELOCITY and the END POSITION and that the type is filled in once the velocity positions are selected. In addition to the tabular form of programming discussed above, there is also a graphical way of presenting the same information. Thus, FIGURES 7A and 7B are a graphical representation of the five chords shown in Table 4 with a display in FIGURE 7B of chord 4 in particular. As shown in FIGURE 7A, the graph is a non-scaled representation of a group of chords. In terms of actual display on a CRT such as that associated with the interconnected programming panel, if more chords are presented by the user than can be shown on the screen, a left-right cursor control is used to slide the viewing window over the graphical representation of the program. If there are more than 25 unique velocity values, an up-down cursor is used as a second sliding window in order to view the various velocity peaks. An inversed video cursor at the end of the chord under EDIT -- with values of the parameter other than the END VELOCITY and END POSITION for each chord shown -- is presented in a fixed area of the screen such as shown in FIGURE 7B where cursor 90 (FIGURE 7A) is at chord 4.

### COMBINED PROGRAMMING

Combined programming is intended to provide a simple means for the less sophisticated user to cope with the RAMP and FEED concepts. Essentially, the user programs the controller by specifying such things as a rapid FEED for a certain number of inches, a FEED at a particular rate for so many additional inches, and a FEED at some other rate for some other number of inches. Combined programming effectively lets the user program so that he or she always knows how much of a particular distance is traveled by the motor (workpiece) at a specified rate. The concept of combined programming thus performs the following:
(a) Prompts the user for velocity and distance information.
(b) Creates two chords on the screen and completes any prior unfinished distance specification.
(c) Indicates any unfinished distance by blinking a number on the screen in inversed video format.
(d) Returns to the edit level to permit the user to retrieve any chord and edit it for any particular gain or output or other variable information which the user wishes to designate.

An example of combined programming is set forth in Table 6.

The motion controller computes the two positions indicated and uses a maximum acceleration factor configured into the system. If the combined mode was entered again, the results set forth in Table 7 might occur.

As shown in Table 7, the END VELOCITY of chord 2 is adjusted to provide for the necessary deceleration ramp. The implementation of combined programming by the user is quite simple. He or she selects a few software labeled keys and then enters numbers. Outputs and other information which may later be desired can be updated into the chords by the user.

In the alternative embodiment of the combined or pictorial programming mode, verbs (e.g. "grind" or "machine") are used with relative or absolute position from the HOME position to determine motor position. Some numbers are required or fixed while others can be ascertained by the machine controller software.

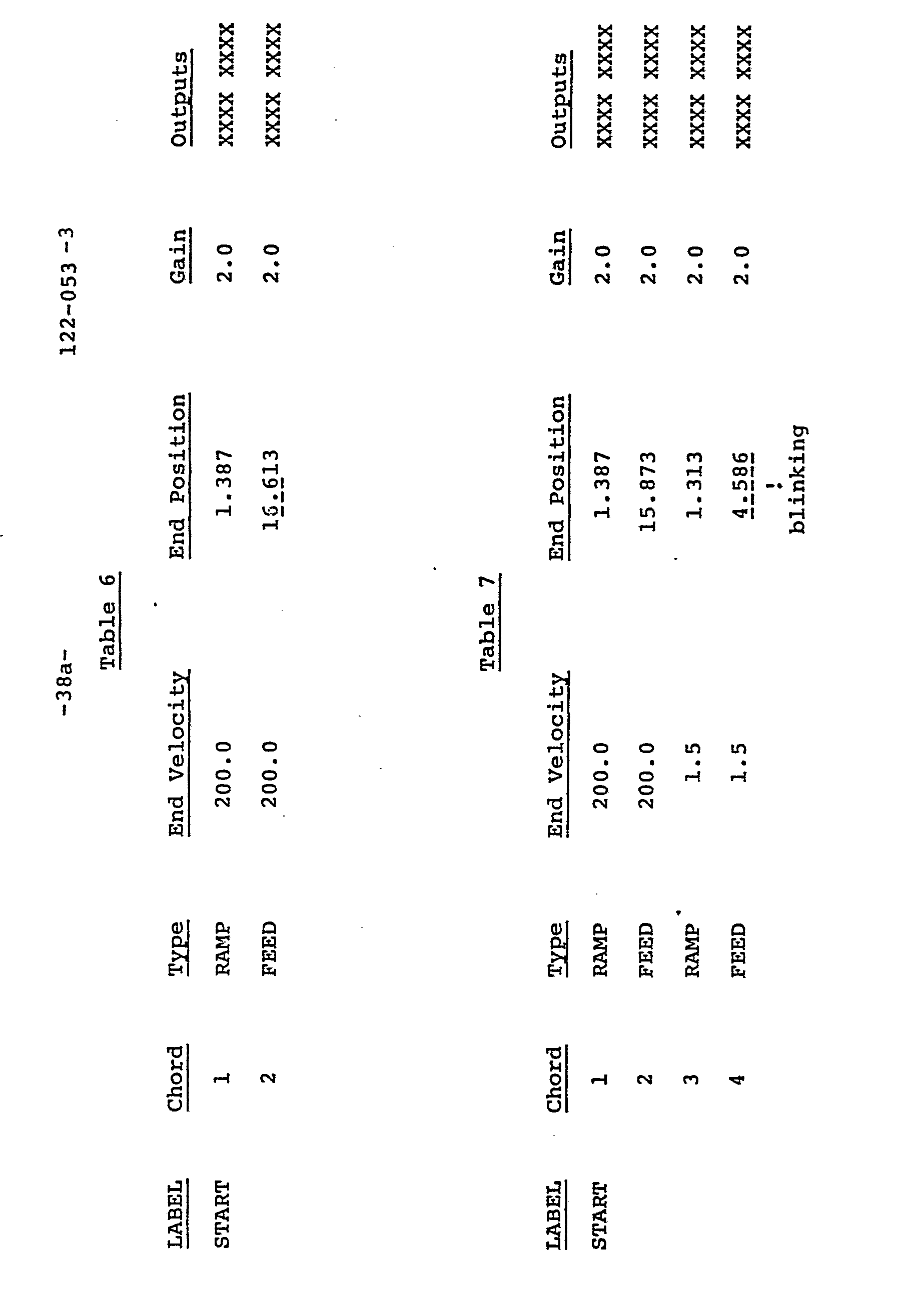

An example is where the user has a rapid FEED from HOME to 26 inches, followed by a FEED from 26 to 30 inches, followed by a MACHINE from 30 to 30.110 inches. The latter operation represents a user defined motion profile.

This technique when applied to multiple axes is a programming technique that allows the user to draw what is known as a "motion map". Such maps have been used by machine tool manufacturers, including Cincinnati Milacron, Inc. of 4701 Marburg Avenue, Cincinnati, Ohio 45209, Biomation and AMF, Inc. of 777 Westchester Avenue, White Plains, N.Y. 10604.

### MOTION CONTROLLER PROGRAMMING LANGUAGE

### Basic Description

As previously disclosed, a user can define a number of chords where groups of chords combine to form motion profiles, each profile having a unique name. The names of the motion profiles can be used in an overall programming language as described in this section. A standard editing approach is described and a dual programming method as described previously with respect to generation of chords equally applies to this programming language.

In a preferred embodiment of the present invention, the motion controller programming language has a simplified, block structured high level format. The computer language includes "IF THEN, ELSE" and "REPEAT BLOCK" capabilities in a structured format. Furthermore, labels and "GO TO" commands are permitted. The underlying concept of this motion controller programming language is to encourage the user to use structured programming but not to require the same. In this approach standard software mnemonics are avoided as much as possible.

An alternative approach for the motion controller programming language is to provide the same capabilities as just described, but to permit the programming in a symbolic, relay logic-like language. Such languages are commonly used by control engineers using programmable controllers such as the relay logic disclosed in U.S. Patents 3,686,639, 3,930,233, 4,162,536, and 4,215,386 and U.S. Application Serial Number 193,593, filed November 3, 1980, all assigned to the present assignee.

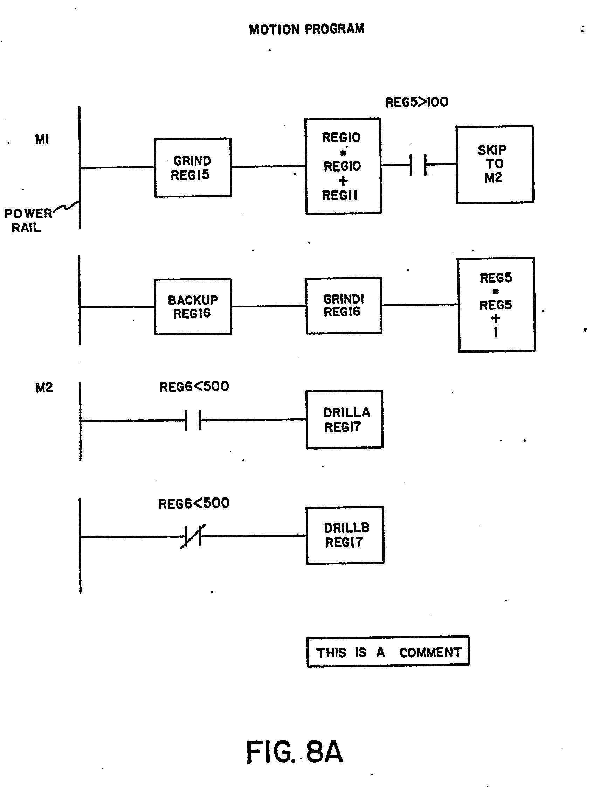

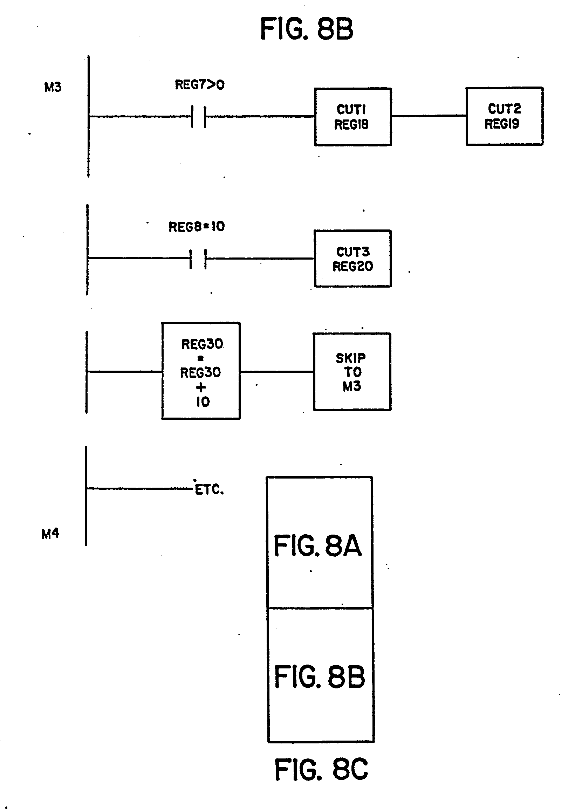

Groups of the user defined profiles become function blocks in such a relay logic programming scheme and "IF" statements become normally open or normally closed contacts. FIGURES 8A and 8B combine to illustrate such a programming scheme. Table 8 corresponds to FIGURE 8 and presents the same programming in a block structured high level language.

The language shown in Table 8 corresponds in general to the following line format:

### LABEL: DO COMMAND + POSITIVE OFFSET, THEN IF CONDITION TRUE, SKIP TO LABEL

This instruction line is_normally contained in the description line at the top of the CRT screen associated with the interconnected programming panel. The description of the various portions of the line format with reference to Table 8 is described in the following subsections.

### LABEL

This field can contain from one to eight characters although the first character must be a letter. The label represents a mnemonic of the user's choosing. Thus in Table 8 the first label is "Ml" and the three subsequent labels are "M2", "M3" and "M4". The purpose of a label is to logically separate and identify different functional areas of a user's program, similar to the network number associated with high level programmable controller languages such as disclosed in U.S. Patent Application Serial Number 895,581, filed April 12, 1978, and owned by the present assignee. Further information on such a programmable controller high level language can be found in a publication identified as "484 User's Manual", published by the present assignee and incorporated herein by reference.

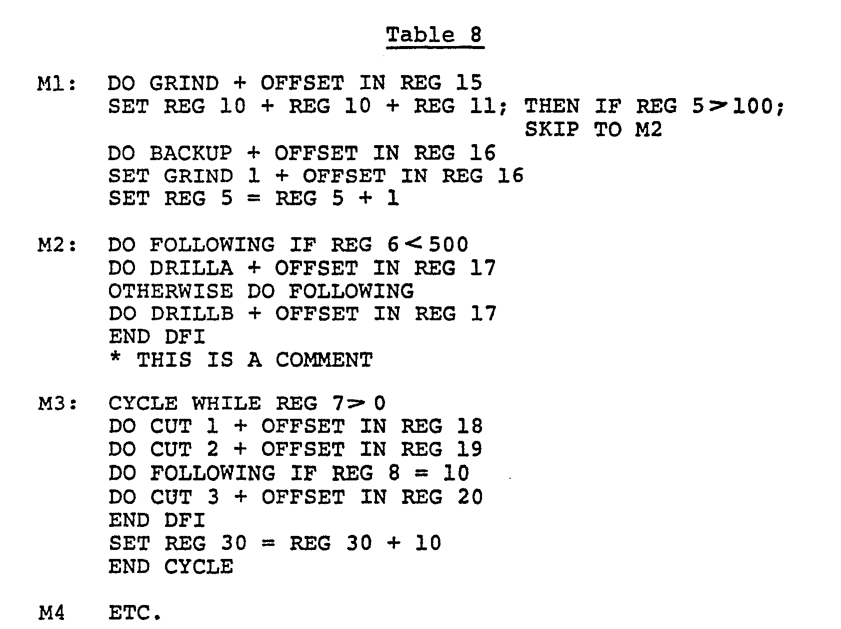

Thus each functional area combines a plurality of motion profiles in a high level language format. The mnemonic in the label field is also used as the destination for a skip instruction as described below.

If the first character in the label field is an asterisk (^{*}), the remainder of the line is a comment line and is stored in the microprocessor system. Such a statement is ignored by the assembler associated with the microprocessor system. An example of such a statement is shown in Table 8 for the function area M2.

### DO

The commands associated with the motion controller high level language include all user defined commands. Thus referring to Table 8 for functional area Ml, the "DO GRIND" is a DO command for selecting a motion profile which has previously been identified by the name "GRIND". It should be noted that when a motion profile is selected, that the "DO" can have a number following it so that the motion profile is performed on the indicated axis. The default axis is one.

### SKIP TO (LABEL)

This instruction specifies that the next command performed is on the line with the indicated label. In the example shown in Table 8, the second line for the functional area Ml terminates with a "SKIP TO M2" so that if line 2 is executed and if register 5 is greater than 100 (this command is discussed below), the program skips to functional area M2.

### SET (EXPRESSION)

This instruction performs the indicated arithmetic expression. The expression can involve up to two registers or constants, an arithmetic operator (+ or -), and an equate to register. In Table 8, the second line for functional area Ml illustrates such a set command in which the value in register 10 is set to be equal to the value in register 10 plus the value in register 11. The fifth line of that same functional area sets the value of register 5 equal to the value of register 5 plus a constant (in this case 1). The SET command can also be used to set inputs and outputs to register contents utilizing the eight least significant bits of the register. It is also possible to set registers equal to system timer values, most significant or least significant value of the current position, or the current following error or raw encoder count.

### DO FOLLOWING IF (CONDITIONED)

This instruction is used with a matching "END DFI" instruction (described immediately below). All instructions between the DO FOLLOWING IF command and IF command are performed if the specified condition is in the logical true state. The condition consists of a register or input and its relationship to.some state. The possible relationships are; (=), (>) , « ), (=>), (= < ) , or not equal to (<>). The state can be a constant or another register.

In Table 8, functional area M2, line 1, is an illstration of a "DO FOLLOWING IF" command in which the condition is "REG 6 500". In this case, the statements between the DO FOLLOWING IF command and the END DFI command are executed if the contents in register 6 are less than 500. It should be noted that 500 could instead be a register and the value of that register examined with respect to the value in register 6.

### END DFI

This command is the end of a DO FOLLOWING IF instruction that is conditionally executed. Thus a matching'END DFI command is required for every "DO FOLLOWING IF" command. Whenever the user specifies a "DO FOLLOWING IF" command, an END DFI command is generated immediately below the DO FOLLOWING IF command with all subsequent lines in the high level language to which the "DO FOLLOWING IF" command relate placed in between these two commands. In this manner, a properly formed block structured language must be executed; thereby eliminating an improperly formed block and associated jump-outs from the block, sometimes known in high level computer language jargon as "spaghetti programming".

### OTHERWISE DO FOLLOWING

This command can be used only after a "DO FOLLOWING IF" command. This command denotes the beginning of a block of instructions that are performed only if the condition in the "DO FOLLOWING IF" command is false. When using this command, the END DFI command can be replaced with an OTHERWISE DO FOLLOWING command.

### CYCLE WHILE (CONDITION)

This instruction is similar to a "do loop" instruction found in high level computer languages and provides that as long as the indicated condition is in the logical true state, the block of instructions that follows, concluded by an "END CYCLE" command is performed. The conditional part of this instruction is of the same form as that allowed in the DO FOLLOWING IF command and the test to see if the condition is true or false is performed before the block is executed.

In Table 8, functional area M3 shows a CYCLE WHILE command. In this particular case, the instruction causes the next six sequential lines to be executed so long as the contents in register 7 are greater than zero. This condition, register 7 greater than zero, is.the same type of condition which can be used for the DO FOLLOWING IF command.

### END CYCLE

This command is generated whenever a CYCLE WHILE command is generated and follows the CYCLE WHILE command with all subsequent statements to be executed by the CYCLE WHILE command interposed between these two commands. The END CYCLE command indicates the end of a block of instructions that comprise a conditional loop. Since the programming panel automatically applies this END CYCLE statement while the user is programming, the possibility of failing to enter such a statement is eliminated.

### SYNCHRONIZE THE FOLLOWING

This command, though not specifically implemented in the appended program listings, allows for user defined motion profiles which sequentially follow the instruction to be started simultaneously or as close to simultaneously as possible. Each axis of the motion controller can be mentioned only once in the block defined by this command. An END SYNCH command defines the end of this block, and the instruction following the end of the block starts when all the instructions in the block have been completed.

### END SYNCH

This command defines the end of the SYNCHRONIZE THE FOLLOWING command. The END SYNH command is required for every SYNCHRONIZE THE FOLLOWING command and is automatically generated by the interconnected programming panel whenever the SYNCHRONIZE THE FOLLOWING command is inserted.

### POSITION OFFSET

The column identified as "POS. OFFSET" represents a register or a constant that can be designated to act as a positional offset to all absolute positions within a user defined motion profile. In Table 8, functional area Ml defines the selection of the GRIND motion profile with an offset as set forth in register 15. Thus the numbers stored in register 15 are then added to the motion profile defined by the GRIND label so that the absolute position defined by the GRIND motion profile is moved, or offset, by this number. By referencing the offset to a register, the number within the register can be sequentially changed so that each time a particular motion profile is executed, the absolute position for each of the chords defined in the motion profile is moved by some amount.

### THEN IF CONDITION TRUE, GO TO LABEL

This column of the command line constitutes a conditional SKIP TO command. Any condition which is permissible in a DO FOLLOWING IF command can be used for this conditional command. If the condition is true, the next command executed is the label indicated in the adjacent column. Otherwise, the next sequential instruction is performed.

In the example shown in Table 8, functional area Ml utilizes such a conditional command at line 2. In this particular case, the number in register 10 is first set equal to the number in register 10 plus register 11. After this instruction is performed, the motion controller determines if the contents in register 5 are greater than 100, and if so, the motion controller skips to functional area M2; otherwise, it moves to the third line of functional area Ml to select the "BACKUP" motion profile.

Thus, it is seen that the basic instruction line permits great flexibility to the user for defining the interconnection of motion profiles so as to generate an overall motion program to meet the user's specific needs.

### PRIORITY EXECUTION PROGRAM

### Basic Description

The priority execution program comprises a subset of the motion controller programming language described above. It contains a list of possible conditions and programs to execute should those conditions ever occur. The editing of the priority execution program is similar to the editing of the motion controller program and chords.

The priority execution program, when executed, generates interrupt conditions which prevent execution of the main motion controller program. The priority execution program is thus considered to be an "if ever" program, so that when certain conditions occur, the priority execution program is executed to the exclusion of all other programs.

The high level instruction set of the priority execution program consists of DO COMMANDS and POSITIVE OFFSET columns. It is also possible to use the symbolic analog to this language instead of the mnemonic approach.

The basic instruction line for a priority execution program has the following format:

### IF CONDITION EVER TRUE, DO THESE COMMANDS + POSITIVE OFFSET

The permissible entries for each column are described under the following subheads.

### IF CONDITION EVER TRUE

This column simply defines that if a specified condition is true, the motion controller should cease what it was doing, even if it is in the middle of an instruction, and instead execute the priority execution program as indicated in the next two columns. Consequently, the priority execution program requires the user to define motion profiles that can be executed even if the motor is not at zero velocity.

The IF CONDITION EVER TRUE statement in addition to indicating a priority execution program also serves to indicate the end of the previous block of instructions being conditionally executed. Nevertheless an END DFI is required to indicate the end of a block and such an END DFI statement is automatically generated by the interconnected programming panel.

### DO THESE COMHANDS + POSITIVE OFFSET

These two columns specify which commands are executed if the stated condition in the first column is logically true. The execution of these commands with the positive offset is the same as described earlier with respect to the motion controller main programming language except that a SKIP TO (label) is not permitted.

A pictorial representation for implementation of a priority execution program is shown in FIGURE 5. As seen there, if register 10 for instance is ever equal to the value 100, then the priority execution program is initiated. The block following the open contact representing register 10 equal to 100 identifies a command labeled "EMSTOP" plus a positive offset as contained in register 20. Once these commands are executed, the program goes on to set the value in register 100 equal to 40 and continues in whatever manner the user desires. The execution of this priority execution program is performed at any time that it is seen that register 10 is equal to the value of 100 and thus is performed regardless of where the system is with respect to executing the motion program.

This priority execution program therefore allows certain emergency conditions to interrupt the motion controller and cause emergency commands to be executed in a way which will theoretically bring the interconnected motor or motors to safe operating conditions.

### Motion Controller Internal Register Use

The motion controller contains up to 512 internal sixteen bit registers of which a subset are user configurable. The number of registers is determined by the amount of programming space utilized. As more space is used, there are fewer registers available.

The internal registers can be used as flags to pass information between an interconnected programmable controller and the motion controller or to pass decisions on to other parts of the motion controller program. The internal registers can also be used in calculations.

Use of internal registers is performed by specifying a register number in the motion control program. For example, the following instructions could be designated in the motion controller program:
DUE FOLLOWING IF REG 10 < 512 AND
SET REG 15 = REG 16 + REG 17

In the first line of the instructions, the value in register 10 is used as a test condition as compared to the number 512 and if the value in register 10 is less than 512, the following command is executed. The statement,

SET REGISTER = REG 16 + REG 17 causes the value in register 15 to be equal to the sum of the values in registers 16 and 17.

The internal registers may also be used as offsets to a motion profile. When the registers are used in this manner, the contents of the register, multiplied by a user configured scale factor, is added or subtracted to or from every absolute position in the END POSITION column of that particular profile. Such a statement is specified in the motion controller program as shown below: DO DRILL, OFFSET BY -REG 10

Although not shown, a scale factor could be selected equal to .1, .01, .001 inches and is set for the entire system at the time of initial configuration.

Internal registers can also be used as offsets to an individual relative position for a specified chord within a motion profile. The contents of the register multiplied by the scale factor is added to any relative end position of that chord. Table 9 is an example using an internal register as a relative positional offset. In chords "N" and "N+l", the contents of registers.5 and 6 are respectively multiplied by the scale factors (such as inches) and added to 2.0 and 6.37 respectively, so as to change the slope of the RAMP and the length of the FEED.

For chord "N+2", only the value in register 7, times its scale factor, defines the slope of the RAMP and END POSITION.

### Internal Programmable Controller Program

Although the use of an internal programmable controller program with the motion controller is not implemented in the appended program listings, it is envisioned that a programmable controller can have a COIL/REGISTER MEMORY that is sharable with the motion controller. In such a situation, a register, such as register 10 in the programmable controller, is physically the same as register 10 in the motion controller for the exchange of information.

### Command Level

The command level contains the various peripheral commands which a user needs to operate the motion controller. These commands control the operation of the machine and are described in Table 10.

### System Editing Technique

The motion controller utilizes a system editing technique that makes extensive use of software labeled keys 45 (see FIGURE 12) and minimum user key entry. During configuration of command levels, the software labeled keys act as toggles to direct and define data entered into an assembly area typically displayed as inversed video on the cathode ray tube monitor 42 of programming panel 46.

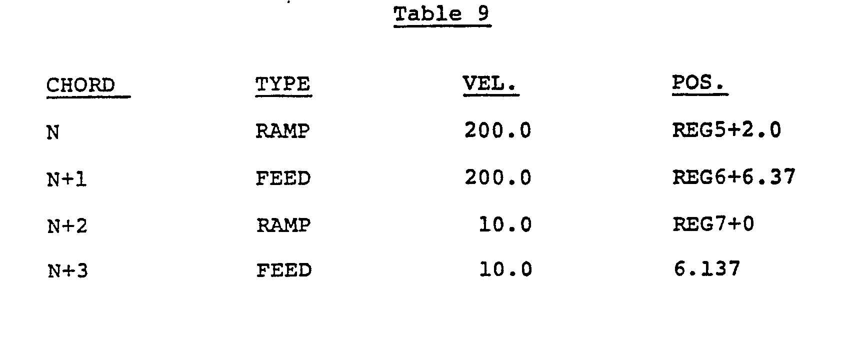

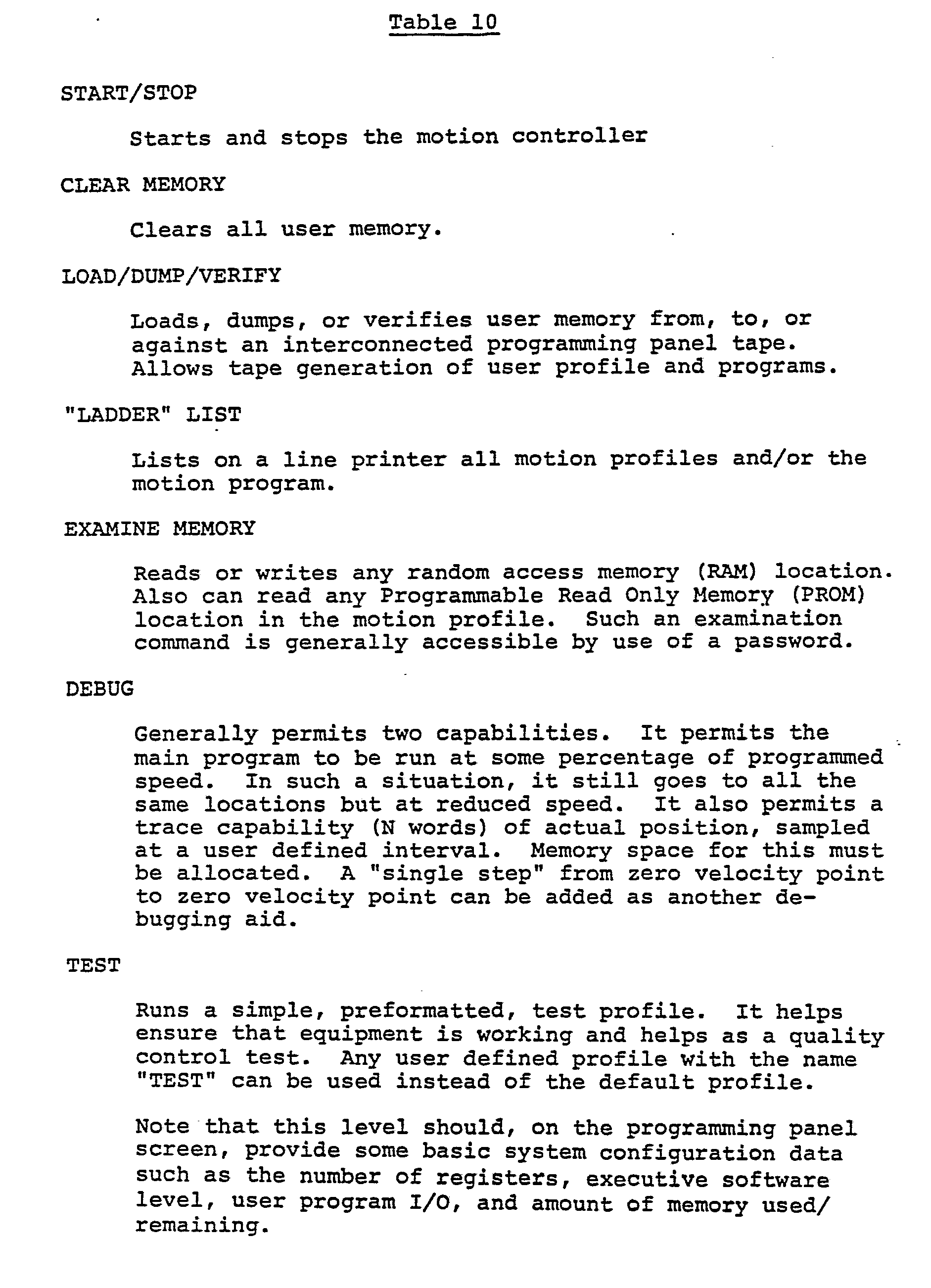

For all programming, including chord generation, motion profile generation, motion controller programming, and priority execution programming, the same general techniques are used.

The basic system screen as shown on the interconnected programming panel is set forth in Table 11.

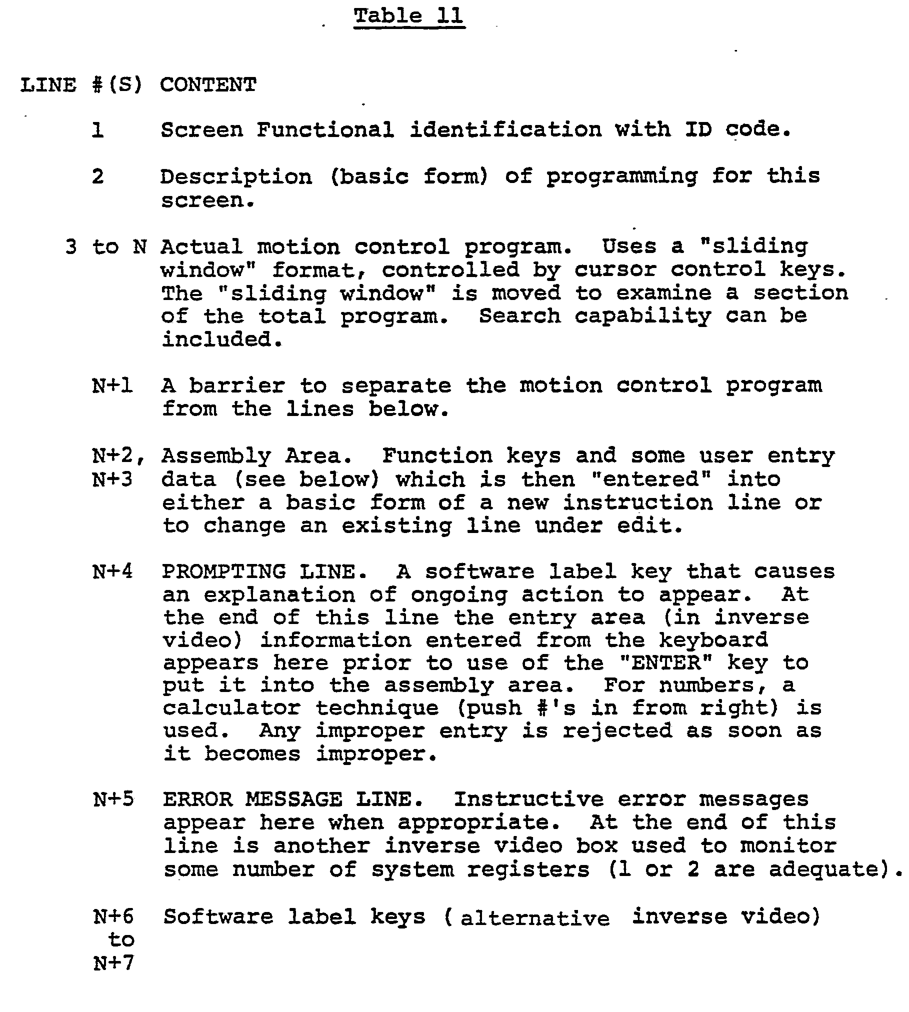

### Example of Editing Chords

Table 12 is an example of a previously entered chord about to be edited. The lower portion of Table 12 illustrates the software labeled key area 57 of the CRT screen 51 (see FIGURE 12) of the programming panel and relates to keys 45 on the programming panel spaced below the labels. Such software labeled keys are utilized in the present assignee's P190 TM programming panel as described in the Gould Modicon Division's 584 User's Manual, incorporated herein by reference.

The software labeled keys associated with the lower portion of Table 12 are used to enter the editor and to retrieve a motion profile so as to yield a motion profile display shown in the upper portion of Table 12. In this particular case, the motion profile is identified by the label "GRIND." Thus the upper portion of Table 12 illustrates the remaining information that would be presented on screen 51.

The key stroke to obtain this retrieval of a previously programmed motion profile is set forth in Table 13.

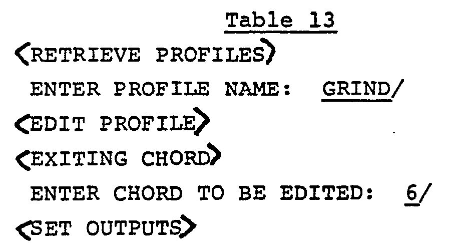

In Table 13 the "/" denotes either a carriage return or line feed while the " <> " indicates the use of a software labeled key. The underscored items represent a user keyboard entry on the programming panel, while everything else shown in Table 13 represents a prompt from the motion controller. The first dotted line between chords 5 and 6 of Table 12 demarcates the screen so that the lower portion represents an assembly area where information can be edited while the

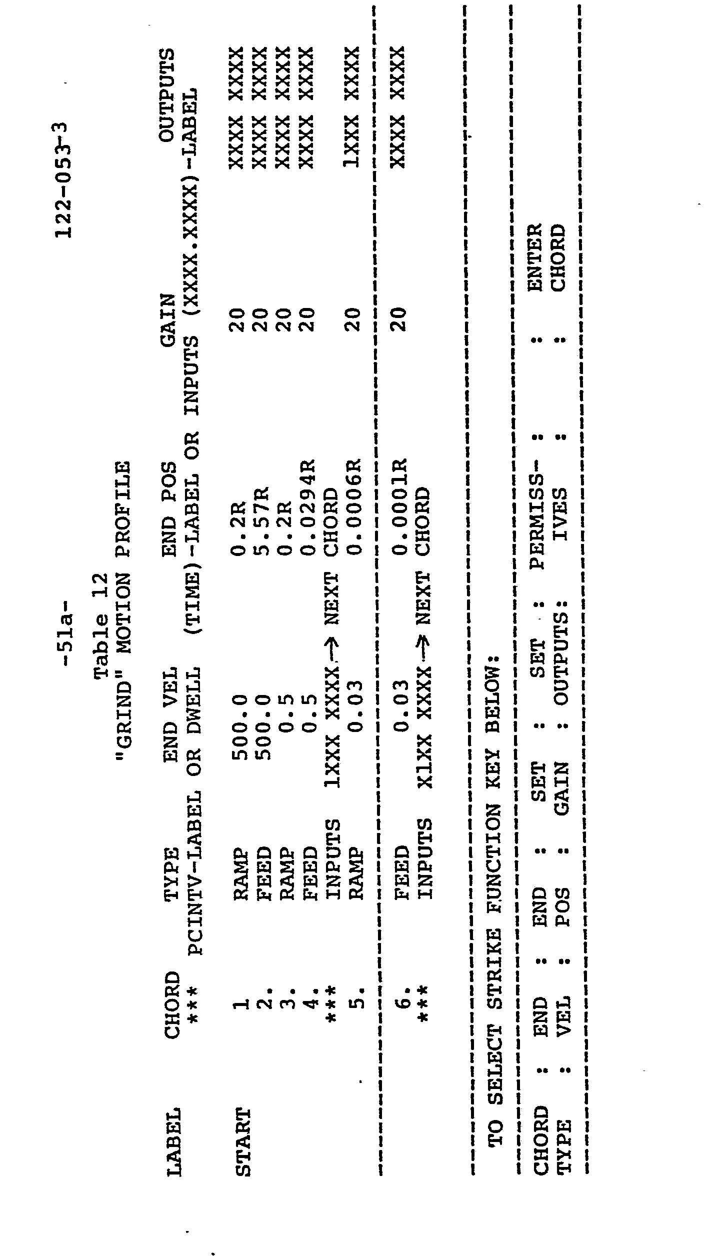

existing outputs are placed in the data entry area. A cursor is normally positioned in the data entry area.

Once the particular desired state is obtained for editing, the user can hit the 0, 1, or X keys to enter a new output point and the left and right cursor keys to move the cursor to the output point to be modified. When the "ENTER" key is hit, new outputs appear in the assembly area, and a message entitled "PLEASE HIT ONE OF THE BELOW KEYS" is displayed. If the "ENTER CHORD SOFT KEY," "Y" is entered, the "NEW" chord 6 would be written over the existing chord.

It should be noted that the up and down cursor keys can be used to look at different portions of the motion profile if the motion profile is larger than the CRT window. Also, the CRT screen has an error message line 73 (see FIGURE 12) for generating error messages whenever an inappropriate action or entry is detected. Furthermore, the motion controller system has a number of screen size HELP messages, one for each important state.of the machine, giving instructions for use of the current level at which the user is operating as well as those of other levels.

The messages can appear as an "ALTERNATE SCREEN" whenever a defined "Help" key is pressed. Such a key is a fixed key and not a software labeled key. Furthermore, the system can include a reference card that can be used as an alternative to the "Help" key. The "Exit" key is used to return the screen to its original state prior to depression of the "Help" key. Such keys and all other non-software labeled keys, though not specifically labeled in FIGURE 12, are part of the keyboard 43.

### Man Machine Interface for the Motion Controller

### Introduction

This portion of the description sets forth the structure and philosophy of the user interface with the motion controller. The discussion shows programming panel interaction with the motion controller for the higher level user. It is in part a summary of the programming operations described earlier.

### Underlying Concepts

An underlying concept of the present invention is to improve the amount of information available to the programming panel user. To achieve this result, the programming panel initializes or resets into a "HELP" level which displays basic operating instructions on the screen.

Additionally, each programming level optionally has a similar instructional screen accessible via a "Help" key. A reference card can also be used to provide the same information.

### Programming Tree Level

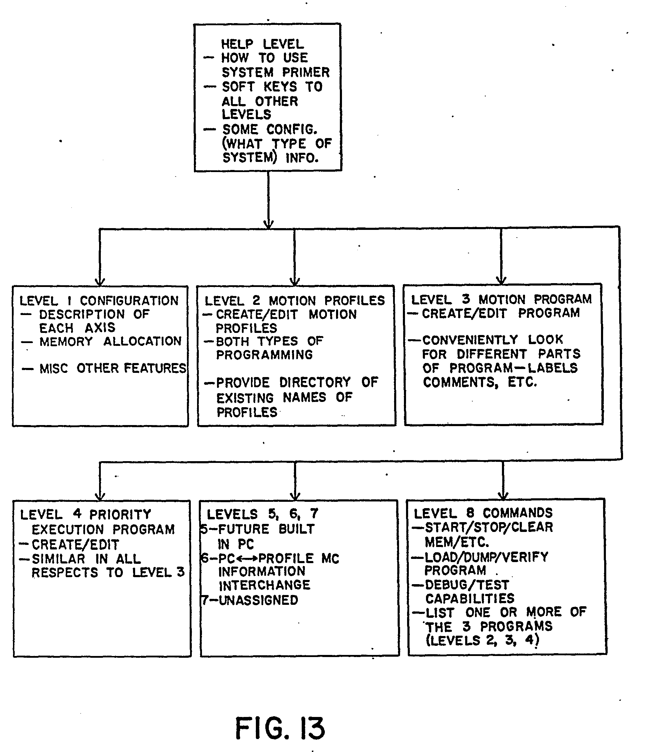

FIGURE 13 illustrates the basic programming levels that the user can access with the motion controller.

The help level gives basic information to the user on how to program and edit the motion controller. As shown in Table 14, the programming panel screen gives the user basic information and identifies the software key (at the lower portion of the table) to allow the user to enter various portions of the program. The soft keys are thus used to shift levels of the overall programming system.

### Level 1: Configuration

This level allows the user to configure the velocity in terms of units as well as the distance in inches or millimeters. Its screen format, once selected, is shown in Table 15.

The "Inches/Metric Key" toggles the arrow to indicate which state the user desires to be in. The "Register Units" key is displayed with an appropriate prompt to allow the user to select the particular units. The "Jog Parameters" and the "Allocate Memory" keys are software configurable and the "Axis Configuration" key causes the display of information as shown in Table 16.

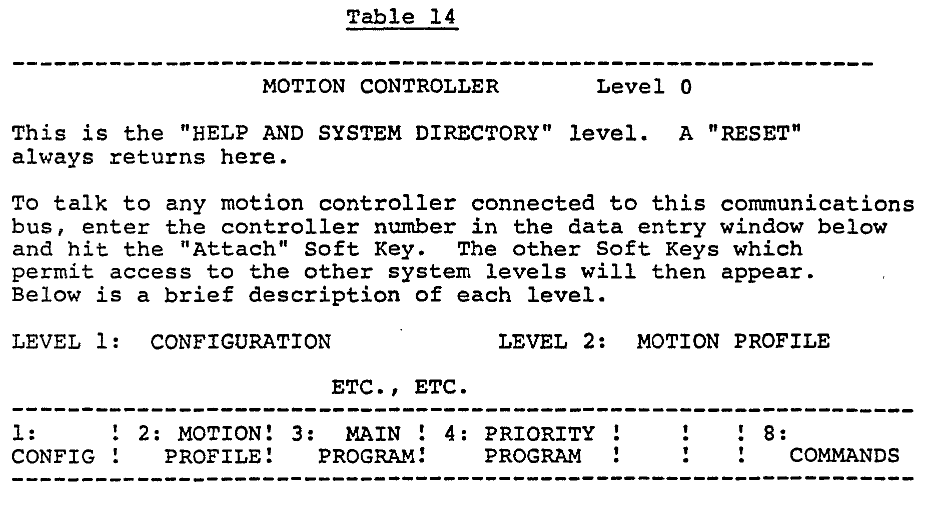

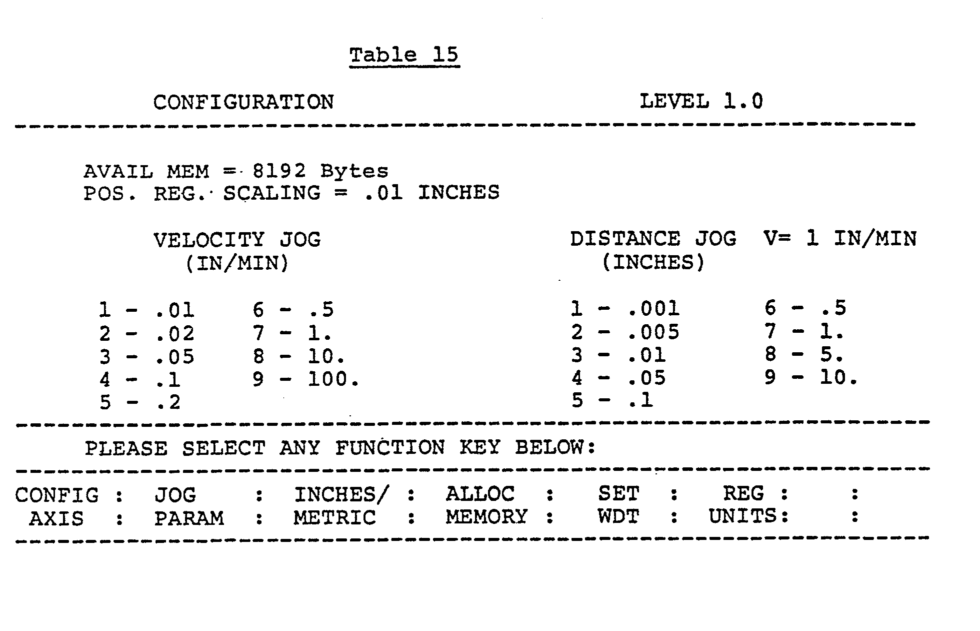

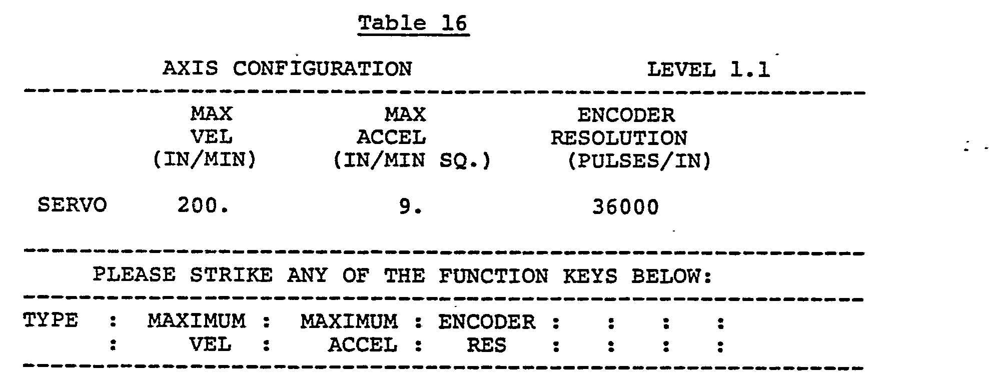

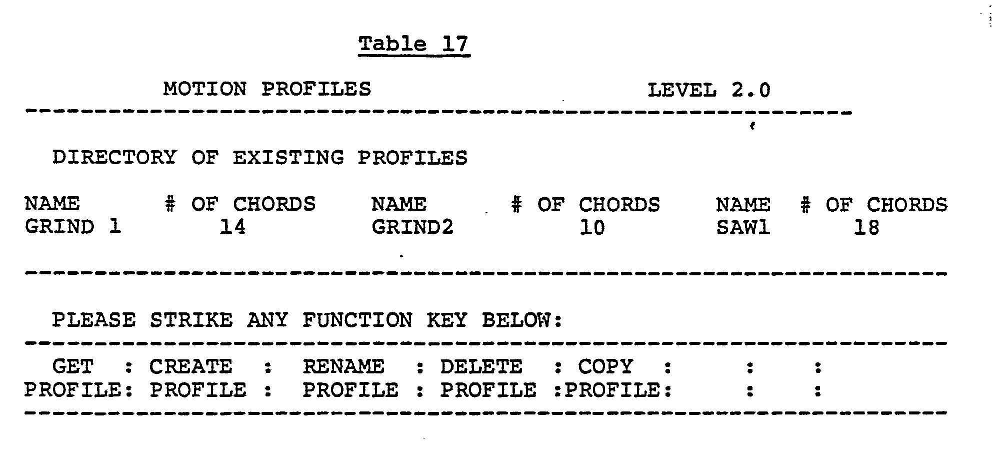

The cursor control keys mark the axis being configured through use of reverse video display of the entire line. This approach eliminates the need for using more than one screen of information, thus minimizing user confusion.

### Level 2: Motion Profile

This programming level typically appears as shown in Table 17. The "Get Profile" key prepares a profile for editing and goes to the screen as typically shown in Table 18.

The "Exit" key takes the user back to the previously entered level. The "TYPE" column is automatically filled by the motion controller unless a skip or a permissive is used. When this happens, the user must characterize the chord.

### Level 3: Motion Program

This level is a subset of level 2 and is displayed on the programming panel screen as shown in Table 19.

The "New Line" key shows the last several lines of the program on the screen automatically. The "Get Line," "Insert Line," and "Delete Line" act on a line at the middle of the screen as indicated by inverse video. The cursor keys move the program up and down through the window. The "Get Line" key moves the actual line to the assembly area.

Depression of the "Get," "New," and "Insert" keys results in a new bottom portion of the screen being displayed as shown in Table 20.

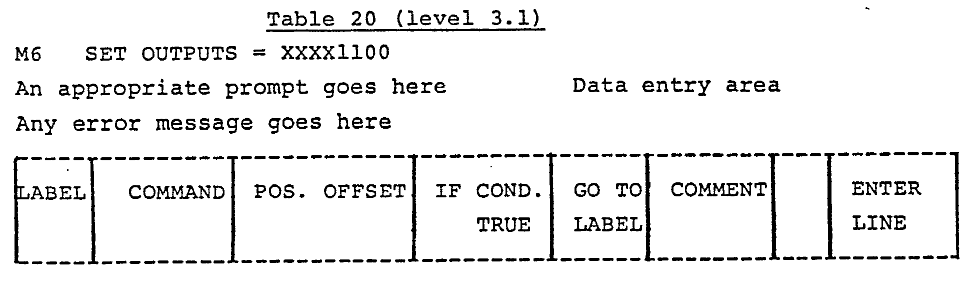

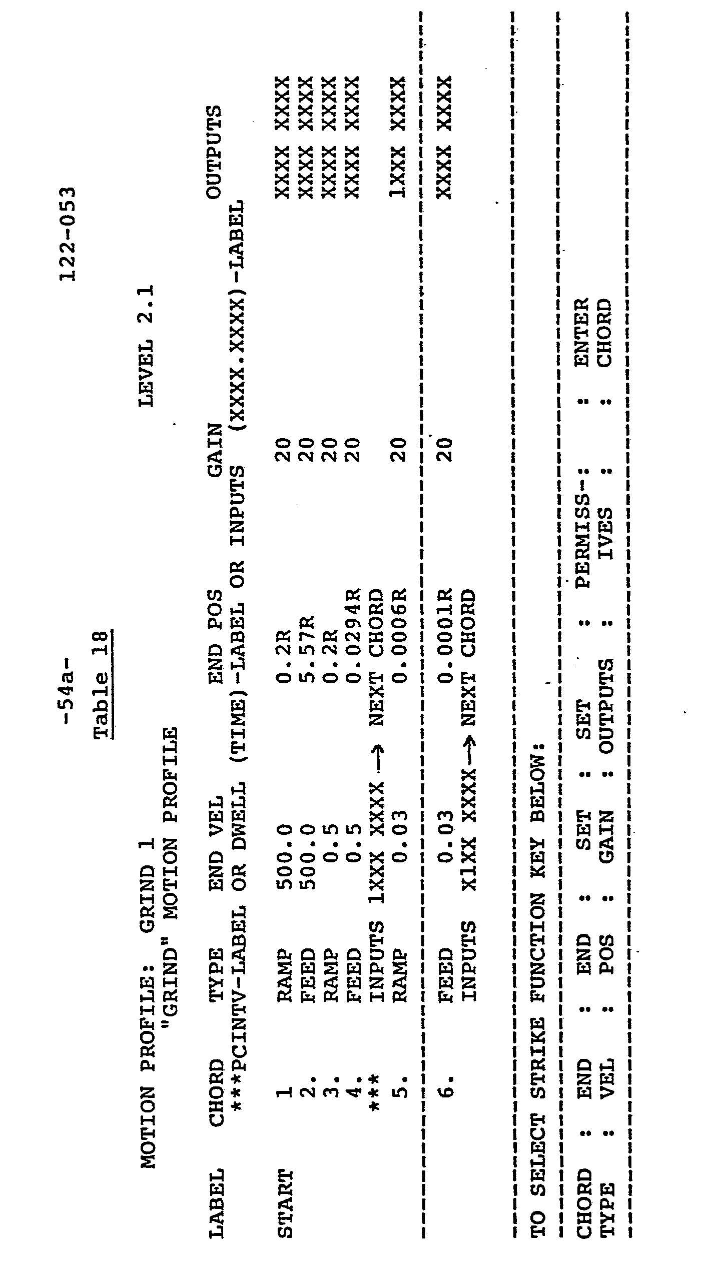

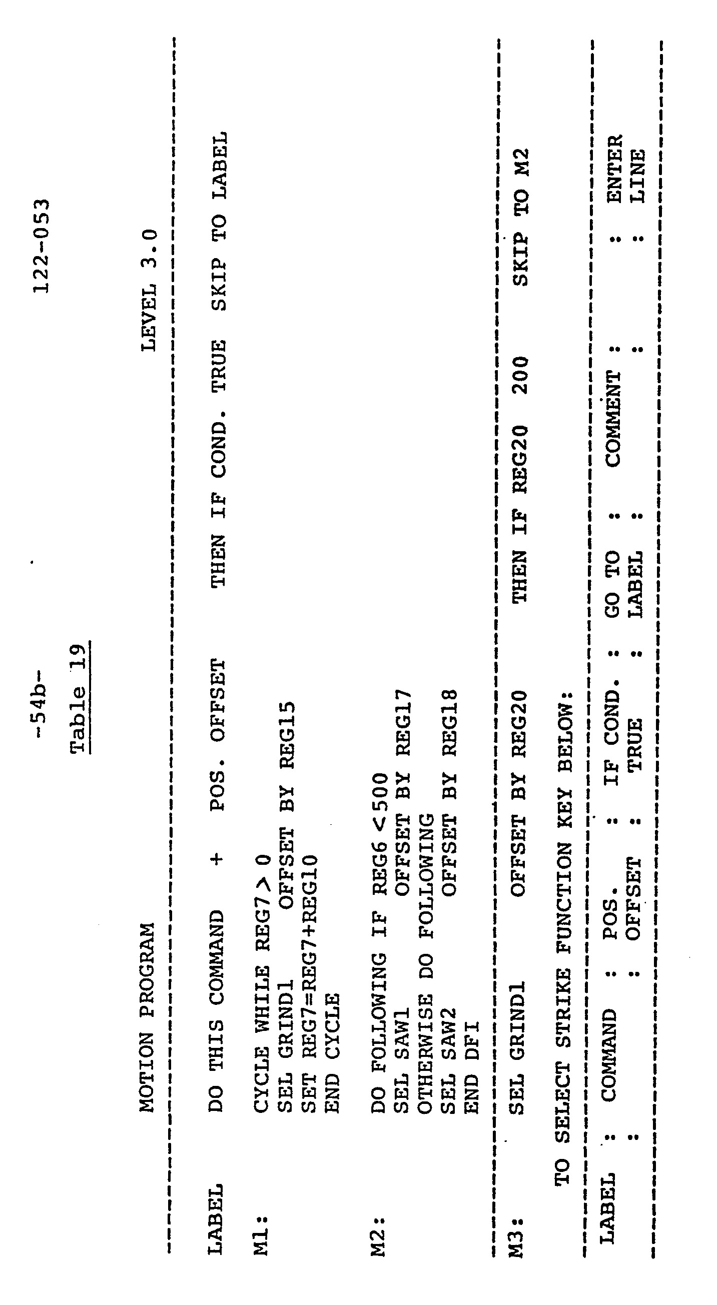

All the soft keys create prompts soliciting proper input information except the "Command" key which changes the soft keys in a manner as shown in Table 21.

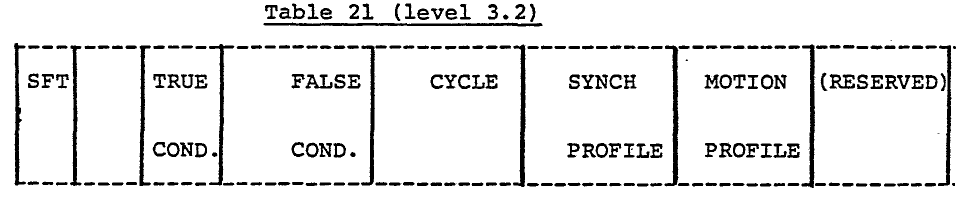

All of the soft keys are displayed with an appropriate prompt while the "Exit" key goes back to the previous level. All entries appear in any area until the "Enter Line" key is depressed, at which time error checking and acceptance or rejection of the entry occurs.

### Level 4: Priority Execution Program

This level is analogous to level 3 except that level 4.1 (see level 3.1) has an "Enter If Ever" key. The "Label" key, the "If Condition True" key, and the "Go To Label" key do not appear in this priority execution program. A sample format of the screen when in this level is shown in Table 22.

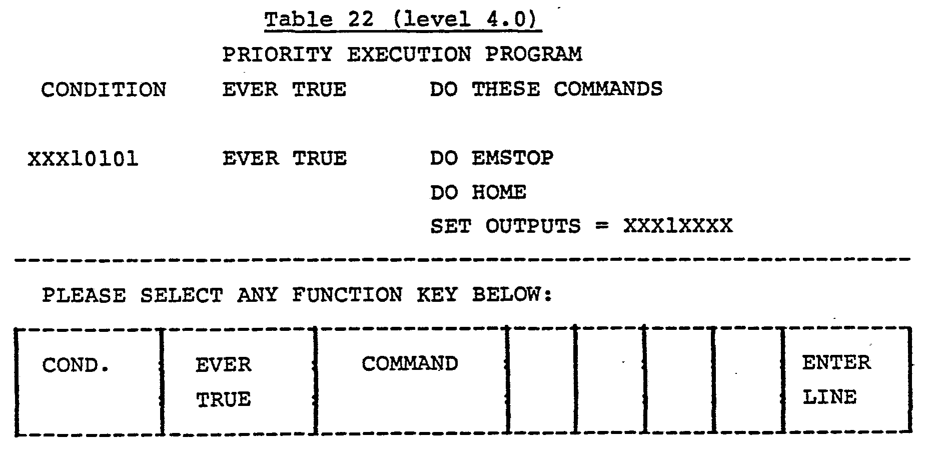

### Level 8: Command Level

This level is shown on the programming panel screen as presented in Table 23.

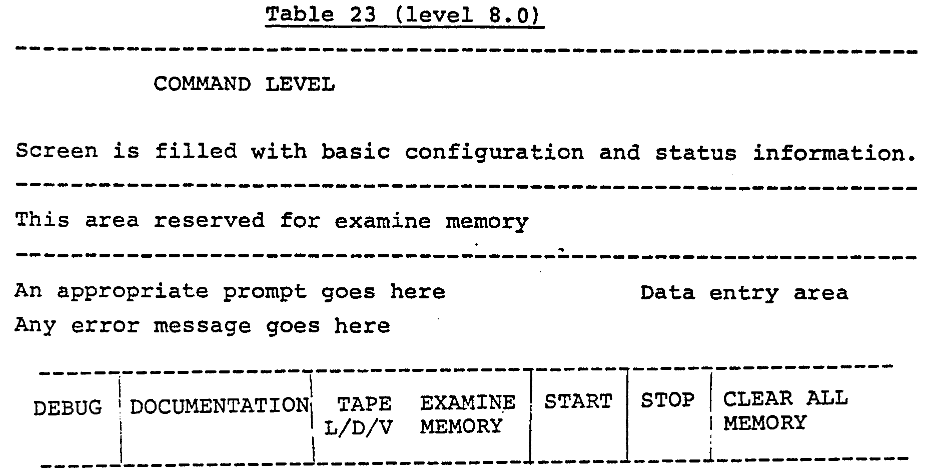

The first three keys from the left as shown in Table 23 bring up new screens and new soft keys. The "Examine Memory" key uses a reserved area on the screen. The other three keys use prompts to confirm their execution and then perform the appropriate action. The "Debug" key displays screen shown in Table 24.

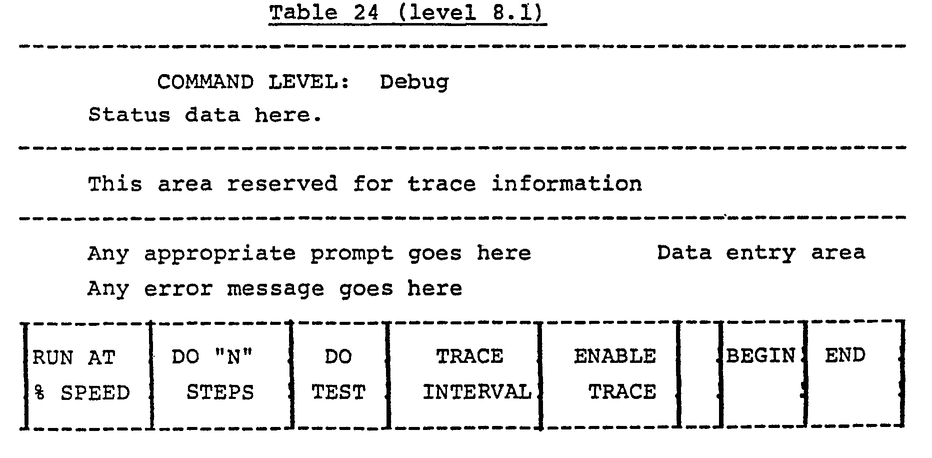

All soft keys except the "Begin" key and "End" key are used to set up conditions, and these latter soft keys control execution.

If a "Documentation" key is depressed, only the soft keys in Table 24 are changed as set forth in Table 25.

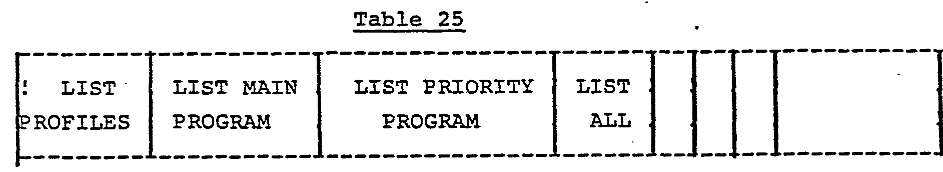

The "Tape L/D/V" key also only changes the soft keys as shown in Table 26.

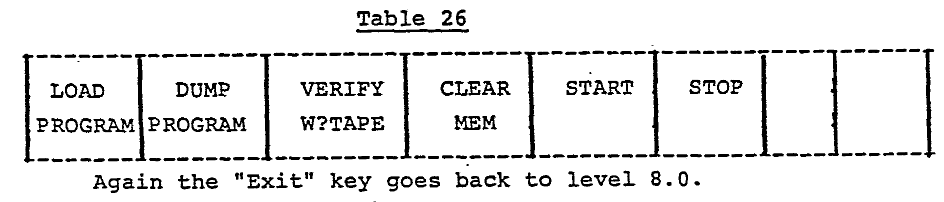

Thus what has been described is a motion controller which is readily programmable by the user so as to define any desired motion. The high level programming language through use of decisional logic and a block structured format, facilitates user definition of the desired motion for end position, velocity, acceleration and direction.

The motion controller through use of its microprocessor system, linear velocity ramp generator, and other components is able to drive the interconnected motor in a manner as programmed by the user as well as to allow monitoring and editing of the motion program and manual control when desired.

It will thus be seen that the objects set forth above, and those made apparent from the preceding description, are efficiently attained and, since certain changes may be made in the above construction without departing from the scope of the invention, it is intended that all matter contained in the above description or shown in the accompanying drawings shall be interpreted as illustrative and not in a limiting sense.

It is also to be understood that the following claims are intended to cover all of the generic and specific features of the invention herein described, and all statements of the scope of the invention which, as a matter of language, might be said to fall therebetween.

Having described the invention what is claimed is:

## Claims

1. A motion controller for controlling the velocity, end position, acceleration, and direction of an interconnectable motor with an encoder output related to the motor's position, comprising:
A) a linear velocity ramp generator for generating an output signal (67) representing a desired motion for the motor;
B) a following error to velocity converter (60) interconnected to the LVRG and interconnectable to the encoder output, so as to generate a velocity error output signal (79) related to the difference between the LVRG and encoder output signals, and thus representing the correction needed to the output from the LVRG so as to properly drive the interconnectable motor, the velocity error output signal also related to a gain signal received by the converter;
C) means for summing the output signals from the LVRG and the following error to velocity converter, for generating a signal to drive the interconnectable motor; and
D) a microprocessor system interconnected to the LVRG and the following error to velocity converter, the microprocessor system comprising a microprocessor, a memory, and associated control circuitry for storing and executing a user motion program, the motion program comprising a plurality of unique user definable motions (chords), each chord designatable by parameters including end velocity, end position, acceleration, direction and gain to be utilized in the following error to velocity converter for each chord to be executed by the motor.

2. A motion controller as defined in Claim 1 wherein the LVRG comprises a pulse generator interconnected to the microprocessor system for generating pulses indicative of the desired velocity end position, acceleration, and direction of the interconnectable motor, and a digital to analog (D/A) converter receiving the output from the pulse generator so as to in turn generate an output of the LVRG in an analog form.

3. A motion controller as defined in Claims 1 or 2 wherein the following error to velocity converter comprises:
a) an up/down counter having one input connected to the output of the LVRG pulse generator and a second input connected to the encoder output and generating therefrom a following error signal indicative of the difference between the two inputs to the up/down counter,
b) a digital to analog (D/A) converter connected to the output of the up/down counter for generating an analog output signal,
c) an amplifier receiving the output from the D/A converter and an input from the microprocessor system indicative of the gain to be associated with the particular chord under execution by the motion controller so as to generate an output signal (79) related to the amount of error between the desired motor position and the actual motor position adjusted by an amount determined by the gain from the microprocessor system.

4. A motion controller as defined in Claim 1 wherein the motion controller further comprises a communication system interconnected to the microprocessor system for communicating with an interconnectable programming panel for programming, monitoring and editing the motion program as well as for displaying status information of the motion controller.

5. A motion controller as defined in Claims 1 or 4 wherein the microprocessor system stores and executes a user defined motion program wherein the motion program is configured in the following way:
1) chords defining an end velocity and end position, the end position being definable as either a set value or a "don't care" value, wherein each chord may designate one or more permissive conditions for causing the termination of the chord so that either the next sequential chord is executed or some other designated chord defined by the permissive condition is executed,
2) motion profiles combining two or more chords together,
3) blocks or functional areas combining one or more motion profiles through use of a high level programming language.

6. A motion controller as defined in Claim 5 wherein the high level programming language includes statements for repetitively executing a block of instructions and wherein the repetitive instructions have an end statement associated therewith automatically generated upon user selection of the repetitive statement.

7. A motion controller as defined in Claim 5 wherein a permissive condition for terminating a particular chord's execution includes the passage of an amount of time equal to a user definable dwell time for the particular chord.

8. A motion controller as defined in Claim 7 wherein the communication system further incorporates means for communicating with a programmable controller and wherein the motion controller further comprises an input module, interconnected to the microprocessor system for receipt and transfer of outside input information, and wherein the permissive conditions designatable by each chord include a command from the interconnected programmable controller and designated input information from the input module.

9. A motion controller as defined in Claim 8 wherein the motion controller further comprises an output module, and wherein the microprocessor further comprises means for generating output signals to the output module upon execution of user definably chords setting outputs to designated values, and wherein the output module buffers and amplifies these output signals so as to drive external devices.

10. A motion controller as defined in Claim 9 wherein the microprocessor system comprises means for interacting with the programming panel so as to generate a display on the programming panel so as to label keys forming part of the programming panel, and wherein the microprocessor system means causes the programming, monitoring and editing of the motion program to be performed in a menu type format.

ll. A motion controller as defined in Claim 5 wherein the microprocessor system further comprises means for receipt and execution of a priority execution program designatable by the user such that upon the sensing of one or more conditions as designated in the priority execution program the presently executed motion program is interrupted and the priority execution program initiated so as to cause the motion controller to follow designated steps when such a priority execution state exists.

12. A motion controller as defined in Claim 5 wherein the high level programming language executable by the motion controller includes a DO command for causing a particular - motion profile to be executed, a SKIP TO command for causing the motion program to skip to a designated motion profile, a SET command for performing a designatable arithmetic operation, a DO FOLLOWING IF command with an associated condition which causes either one set of motion profiles or some other set of motion profiles to be executed depending upon the state of the condition, an END DFI command designating the end of a DO FOLLOWING IF command, an OTHERWISE DO FOLLOWING command which can be used after a DO FOLLOWING command to mark the beginning of another block of instructions to be executed only if the condition associated with the DO FOLLOWING command is false, a CYCLE WHILE command with an associated condition for causing a block of instructions to be executed if the associated condition is true and for causing the motion program to skip to a designated motion profile if the condition is false, and an END CYCLE command designating the end of a CYCLE WHILE command.

13. A motion controller as defined in Claim 12 wherein the high level language further incorporates a positive offset statement which causes a designated motion profile to be executed with each of the designated end positions altered by the offset value associated with the positive offset command.

14. A motion controller as defined in Claim 1 wherein the motion controller further comprises a keypad/display for allowing the user to operate the motion controller in a manual or "jog" mode and also for monitoring and designating information concerning the motion controller operation and motion program.
